# EUROPÄISCHE PATENTANMELDUNG

(11) **EP 3 893 213 A1**
(43) Veröffentlichungstag der Anmeldung: **13.10.2021**
(21) Anmeldenummer: 21166987.4
(22) Anmeldetag: 06.04.2021
(51) Int. Cl.: G08B 21/22

(54) **COMPUTERPROGRAMMPRODUKT FÜR EIN WARNVERFAHREN**

(30) Priorität: 06.04.2020 DE 202020101882 U
(71) Anmelder: comnovo GmbH, 44227 Dortmund (DE)
(72) Erfinder: Lewandowski, Andreas, 44227 Dortmund (DE); Lammering, David, 44227 Dortmund (DE); Winkler, Ron, 44227 Dortmund (DE)
(74) Vertreter: Eisenführ Speiser

(57) **Zusammenfassung**

Die Erfindung betrifft ein Computerprogrammprodukt zum Durchführen eines Warnverfahren aufweisend: eine Detektionsphase, mit: Senden eines ersten Blinksignals mittels eines ersten Personensicherheitsmoduls; Überwachen eines Empfangsbereichs einer Empfangseinheit; Detektieren eines zweiten Blinksignals, und Senden eines ersten Blink-Antwortsignals in Antwort auf das Detektieren des zweiten Blinksignals; und/oder Detektieren eines zweiten Blink-Antwortsignals, das in Antwort auf das Empfangen des ersten Blinksignals an dem zweiten Personensicherheitsmodul gesendet wird; und eine Messphase, mit: Überwachen des Empfangsbereichs. Für den Fall, dass während der Detektionsphase ein zweites Blink-Antwortsignal detektiert wird, weist die Messphase auf: Senden eines ersten Laufzeitsignals mittels des ersten Personensicherheitsmoduls; Detektieren eines zweiten Laufzeitantwortsignals von dem zweiten Personensicherheitsmodul, das in Antwort auf ein Detektieren des ersten Laufzeitsicherheitssignal gesendet wird; und Ermitteln eines Abstands zwischen dem ersten Personensicherheitsmodul und dem zweiten Personensicherheitsmodul unter Verwendung des zweiten Laufzeitantwortsignals. Ferner betrifft die Erfindung ein Personensicherheitsmodul, ein Kleidungsstück, und ein Sicherheitssystem.

## Beschreibung

Die Erfindung betrifft ein Computerprogrammprodukt aufweisend Codemittel, die dazu ausgebildet sind, wenn diese auf einer Recheneinheit eines ersten Personensicherheitsmoduls ausgeführt werden, mittels des ersten Personensicherheitsmoduls ein Warnverfahren durchzuführen. Ferner betrifft die Erfindung ein Personensicherheitsmodul, ein Kleidungsstück mit einem Personensicherheitsmodul und ein Sicherheitssystem zum Durchführen eines Warnverfahrens.

Im Rahmen der Infektionskontrolle von ansteckenden Krankheiten, wie zum Beispiel die COVID-19 Pandemie, stellt eine Reduktion sozialer Kontakte, auch als physische Distanzierung von Personen oder social distancing bekannt, ein wirksames Mittel zum Verringern einer Ausbreitungsgeschwindigkeit der Krankheit dar. Wenn ein direkter Kontakt einer infizierten Person zu anderen Personen vermieden wird, sinkt die Gefahr potentieller Neuansteckungen erheblich. Im alltäglichen Leben und auch im Wirtschaftsleben können soziale Kontakte jedoch aus verschiedenen Gründen nicht vollständig vermieden werden. So kann eine soziale Isolation schwerwiegende psychische Krankheiten, wie beispielsweise Depressionen, auslösen. Ferner können soziale Kontakte auch im Rahmen einer Berufsausübung oder bei Geschäften des täglichen Lebens nicht vollständig umgangen werden. Weiterhin ist es oftmals möglich, dass infizierte Personen keine Krankheitssymptome zeigen und somit trotz einer potentiellen Ansteckungsgefahr nicht als infizierte Personen erkannt werden.

Insbesondere im Falle von Krankheiten, die sich durch Tröpfcheninfektionen verbreiten, ist eine absolute Vermeidung sozialer Kontakte nicht zwingend notwendig um Neuansteckungen zu reduzieren und/oder zu vermeiden. Bei einer Tröpfcheninfektion erfolgt eine Ansteckung mittels erregerhaltigen Sekrets aus den Atemwegen einer infizierten Person, welches beispielweise beim Husten oder Niesen in die Umgebung gelangt. Es ist dabei bekannt, dass die maximale Distanz für eine Tröpfcheninfektion wenige Meter beträgt, sodass eine Ansteckung von Personen auch durch ausreichenden räumlichen Abstand zwischen verschiedenen Personen sichergestellt werden kann. Ein konsequentes Einhalten eines Mindestabstands zu anderen Personen ist im Alltag jedoch häufig schwer durchzuführen. So kann das Abschätzen des tatsächlichen räumlichen Abstands für manche Personen erschwert sein oder das Einhalten des Mindestabstands kann vergessen werden. Technische Hilfsmittel können das Einhalten eines ausreichenden räumlichen Abstands zwischen Personen unterstützen und somit einen Beitrag zur Bekämpfung von Infektionskrankheiten leisten. Hierfür ist eine präzise Abstandsbestimmung zwischen Personen nötig. Ferner können Personen darauf aufmerksam gemacht werden, dass der definierte Abstand unterschritten wurde.

Annäherungswarnsysteme sind aus verschiedenen Anwendungsgebieten bekannt. Eine besondere Relevanz haben solche Warnsysteme im Straßenverkehr und in Logistikbereichen. Aus DE 10 2014 213 066 A1 ist ein Kollisionswarnsystem zur Warnung einer sich im Bereich des fließenden Verkehrs aufhaltenden Person und einem am Verkehr teilnehmenden Fahrzeug. Das System umfasst eine Kommunikationsschnittstelle zum Weiterleiten von Nachrichten, einen Energiespeicher und eine Ladeschnittstelle, die in eine Warnweste eingefasst sind. Eine Positionsermittlung erfolgt dabei über Satellitendaten, sodass das System nur in einem Außenbereich wirksam eingesetzt werden kann. Ferner ist der verwendete Aufbau komplex und die verwendeten Systeme somit kostenintensiv. Um eine hohe Verbreitung eines Systems erreichen zu können, sind dabei jedoch besonders geringe Anschaffungs- und Betriebskosten wünschenswert. Weiterhin ist ein Energiebedarf bei der Verwendung von Satellitendaten vergleichsweise hoch, sodass eine maximale Einsatzzeit für das Kollisionswarnsystem beschränkt ist.

GB 2543423 A offenbart ein Verfahren zum Warnen von Personen in einem Logistikbereich, wobei eine Basisstation eine Ausschlusszone für einen gesperrten Bereich definiert. Sobald ein an einem Kleidungsstück einer Person angebrachter passiver Transponder in die Ausschlusszone gelangt, sendet der Transponder ein Detektionssignal an die Basisstation. In Antwort auf das Empfangen des Detektionssignals sendet die Basisstation ein Warnsignal an einen Empfänger, der an dem Kleidungsstück angebracht ist, woraufhin an dem Kleidungsstück eine Leuchteinrichtung eingeschaltet wird. Nachteilig an dem Verfahren ist, dass die Basisstation ortsfest ist und somit kein Warnen zwischen verschiedenen Personen möglich ist.

Es ist also eine Aufgabe der vorliegenden Erfindung, ein Computerprogrammprodukt, ein Personensicherheitsmodul, ein Kleidungsstück mit einem Personensicherheitsmodul und ein Sicherheitssystem anzugeben, die mobil einsetzbar sind, für Innenräume geeignet sind und vorzugsweise eine exakte Abstandsermittlung ermöglichen. Sie sollen eine unnötige Warnung vermeiden, das übliche Leben und die Gewohnheiten von Personen nicht zu stark einschränken und so eine hohe Akzeptanz sowohl im beruflichen als auch privaten Umfeld erlauben und einfach handhabbar sein.

In einem ersten Aspekt löst die Erfindung die eingangs genannte Aufgabe mit einem Computerprogrammprodukt, aufweisend Codemittel, die dazu ausgebildet sind, wenn diese auf einer Recheneinheit eines ersten Personensicherheitsmoduls ausgeführt werden, mittels des ersten Personensicherheitsmoduls ein Warnverfahren durchzuführen, das vorzugsweise aufweist: eine Detektionsphase, mit: Senden eines ersten Blinksignals mittels des ersten Personensicherheitsmoduls; Überwachen eines Empfangsbereichs einer Empfangseinheit des ersten Personensicherheitsmoduls vorzugsweise für einen vordefinierten Erkennungszeitraum. Das Warnverfahren umfasst vorzugsweise: Detektieren eines zweiten Blinksignals, das von einem zweiten Personensicherheitsmodul gesendet wird, und Senden eines ersten Blink-Antwortsignals in Antwort auf das Detektieren des zweiten Blinksignals, und/oder Detektieren eines zweiten Blink-Antwortsignals mittels der Empfangseinheit, das von einem zweiten Personensicherheitsmodul in Antwort auf das Empfangen des ersten Blinksignals an dem zweiten Personensicherheitsmodul gesendet wird. Vorzugsweise umfasst die Detektionsphase, besonders bevorzugt vor dem Senden des ersten Blinksignals, eine Kollisionserkennung. Bei der Kollisionserkennung ermittelt das Personensicherheitsmodul, ob ein zum Senden von Signalen verwendeter Kanal frei ist. Vorzugsweise ist die Kollisionserkennung ein sogenanntes Carrier Sense Multiple Access Verfahren (CSMA).

Zusätzlich oder alternativ zu der Detektionsphase umfasst das Warnverfahren vorzugsweise eine Messphase, mit einer Abstandsbestimmungsoperation, wobei die Abstandsbestimmungsoperation vorzugsweise aufweist: Überwachen des Empfangsbereichs der Empfangseinheit des ersten Personensicherheitsmoduls für einen Detektionszeitraum; für den Fall, dass während der Detektionsphase ein zweites Blink-Antwortsignal detektiert wird, umfasst die Messphase vorzugsweise die Schritte: Senden eines ersten Laufzeitsignals mittels einer Antenneneinheit des ersten Personensicherheitsmoduls; vorzugsweise Detektieren eines zweiten Laufzeitantwortsignals, das von dem zweiten Personensicherheitsmodul in Antwort auf ein Detektieren des ersten Laufzeitsicherheitssignals gesendet wird; und/oder vorzugsweise Ermitteln eines Abstands zwischen dem ersten Personensicherheitsmodul und dem zweiten Personensicherheitsmodul unter Verwendung des zweiten Laufzeitantwortsignals. Vorzugsweise basiert die Abstandsbestimmungsoperation auf einem Symmetrical Doble-Sided Two-Way Ranging verfahren. Vorzugsweise umfasst die Messphase ferner: Senden eines ersten Laufzeitantwortsignals in Antwort auf das Detektieren des zweiten Laufzeitantwortsignals.

Während der Detektionsphase werden vorzugsweise neu in den ersten Empfangsbereich der ersten Empfangseinheit eintretende Personensicherheitsmodule erkannt. Ein Blinksignal ist dabei ein Signal, das eine Erreichbarkeit des sendenden Moduls signalisiert und ein empfangendes Modul zum Antworten auffordert. Vorzugsweise weist das Blinksignal eine kurze Signaldauer auf. Ferner bevorzugt umfasst das Blinksignal einen Bezeichner, der das sendende Modul kennzeichnet. Empfängt das erste Personensicherheitsmodul in Antwort auf das erste Blinksignal das von dem zweiten Personensicherheitsmodul bereitgestellte Blinkantwortsignal, so setzt das erste Personensicherheitssignal für eine Beziehung zum zweiten Personensicherheitsmodul vorzugsweise einen ersten Anchor-Status. Wenn das erste Personensicherheitsmodul in Antwort auf ein von dem zweiten Personensicherheitsmodul empfangenes zweites Blinksignal ein erstes Blinkantwortsignal sendet, setzt das erste Personensicherheitsmodul für eine Beziehung zum zweiten Personensicherheitsmodul vorzugsweise einen ersten Tag-Status. Das erste Personensicherheitsmodul hat also in einer Beziehung zu einem anderen Personensicherheitsmodul Situationsabhängig entweder den ersten Tag-Status oder den ersten Anchor-Status. Dabei kann das erste Personensicherheitsmodul in einer Beziehung zu einem zweiten Personensicherheitsmodul beispielsweise den Anchor-Status und in einer Beziehung zu einem dritten Personensicherheitsmodul den Tag-Status haben. Ein besonderer Vorteil der Erfindung liegt also darin, dass die Personensicherheitsmodule jeweils die Fähigkeit haben, sowohl als Anchor als auch als Tag zu agieren. So lässt sich die Kommunikation zwischen den einzelnen Modulen leicht erweitern und dem Kernproblem des sehr dynamischen Systems begegnen. Zudem kann so Energie gespart werden, sodass die batteriebetriebenen Module mobil sind. Vorzugsweise werden Bezeichner, die mit von dem Personensicherheitsmodul detektierten Signalen übermittelt werden, von der ersten Steuereinheit des Personensicherheitsmoduls in einer Liste gespeichert. Die Reihenfolge der Bezeichner in der Liste definiert vorzugsweise eine Rangfolge bei einem Ermitteln, ob ein empfangener Bezeichner bekannt ist.

In einer ersten bevorzugten Ausführungsform erfolgt das Überwachen des Empfangsbereichs der Empfangseinheit nur während des Erkennungszeitraums und während des Detektionszeitraums. Allgemein wird für ein Überwachen des Empfangsbereichs viel elektrische Energie benötigt, sodass durch ein Beschränken des Überwachens vorzugsweise ausschließlich auf den Erkennungszeitraum und/oder den Detektionszeitraum ein Energiebedarf effektiv reduziert werden kann. Auch kann vorgesehen sein, dass außerhalb des Erkennungszeitraum und/oder den Detektionszeitraum die Empfangseinheit nicht vollständig ausgeschaltet wird, sondern nur mit geringerer Energie betrieben wird und/oder sequenziell kurzzeitig auf Empfang geschaltet ist.

Gemäß einem zweiten Aspekt oder einer bevorzugten Weiterbildung löst die Erfindung die eingangs genannte Aufgabe mit einem Computerprogrammprodukt, aufweisend Codemittel, die dazu ausgebildet sind, wenn diese auf einer Recheneinheit eines ersten Personensicherheitsmoduls ausgeführt werden, mittels des ersten Personensicherheitsmoduls ein Warnverfahren durchzuführen, das aufweist, eine Detektionsphase, mit: Senden eines ersten Blinksignals mittels des ersten Personensicherheitsmoduls; Überwachen eines Empfangsbereichs einer Empfangseinheit des ersten Personensicherheitsmoduls vorzugsweise für einen vordefinierten Erkennungszeitraum auf den Empfang eines zweiten Blink-Antwortsignals und/oder zweiten Blinksignals. Vorzugsweise umfasst das Warnverfahren eine Messphase, mit einer Abstandsbestimmungsoperation, wobei die Abstandsbestimmungsoperation vorzugsweise aufweist: Überwachen des Empfangsbereichs der Empfangseinheit des ersten Personensicherheitsmoduls für einen Detektionszeitraum; vorzugsweise Ermitteln eines Abstands zwischen dem ersten Personensicherheitsmodul und dem zweiten Personensicherheitsmodul wobei das Überwachen des Empfangsbereichs der Empfangseinheit vorzugsweise nur während des Erkennungszeitraums und/oder während des Detektionszeitraums erfolgt. Durch das Beschränken des Überwachens des Empfangsbereichs wird in analoger Weise zum ersten Aspekt der Erfindung bzw. der oben beschriebenen Ausführungsform ein reduzierter Energiebedarf beim Ausführen des Warnverfahrens erreicht.

In einer bevorzugten Ausgestaltung ist der Detektionszeitraum geringer ist als der Erkennungszeitraum. Wenn ein erstes Personensicherheitsmodul in dem Erkennungszeitraum bereits weitere Personensicherheitsmodule erkannt hat, kann der Erkennungszeitraum verkürzt durchgeführt werden, wodurch eine weitere Energieersparnis möglich ist. Insbesondere wird das erreicht, wenn der Erkennungszeitraum um einen vordefinierten Zeitraum zum Erkennen des weiteren Personensicherheitsmoduls durchgeführt wird. Vorzugsweise ist das erste Personensicherheitsmodul dazu ausgebildet, einen Zeitpunkt, zu dem der Erkennungszeitraum beginnt an ein weiteres Personensicherheitsmodul zu senden und/oder den Zeitpunkt mit dem weiteren Personensicherheitsmodul im Erkennungszeitraum abzustimmen.

Vorzugsweise wird die Messphase im Anschluss an die Detektionsphase, vorzugsweise unmittelbar, durchgeführt. Dies ist besonders vorteilhaft um einen energieeffizienten Ablauf des Warnverfahrens zu erreichen. Besonders sind in dem ersten Personensicherheitsmodul und dem zweiten Personensicherheitsmodul zu Beginn der Messphase bereits ein Anchor-Status beziehungsweise ein Tag-Status gesetzt. Vorzugsweise bestimmt der gesetzte Status ein Verhalten des Personensicherheitsmoduls in der Messphase. Besonders bevorzugt sendet das Personensicherheitsmodul in der Messphase das Laufzeitsignal aus, wenn der Anchor-Status gesetzt ist. Ebenso bevorzugt wartet das Personensicherheitsmodul in der Messphase auf ein Detektieren eines von einem anderen Personensicherheitsmodul bereitgestelltes Laufzeitsignal, wenn der Tag-Status gesetzt ist.

Vorzugsweise wird im Anschluss an das Ermitteln, vorzugsweise unmittelbar im Anschluss, an das Ermitteln eines Abstands zwischen dem ersten Personensicherheitsmodul und dem zweiten Personensicherheitsmodul ein erstes Abstandssignal von dem ersten Personensicherheitsmodul gesendet, das den Abstand repräsentiert. Das Abstandssignal ermöglicht daher ein einfaches Bestimmen des Abstands auch bei dem das Abstandssignal detektierenden Personensicherheitsmodul. Bevorzugt wird für den Fall, dass während der Detektionsphase ein zweites Blinksignal detektiert wird, ferner ausgeführt: Detektieren eines zweiten Abstandssignals, das von dem zweiten Personensicherheitsmodul gesendet wird, wobei das Ermitteln des Abstands zwischen dem ersten Personensicherheitsmodul und dem zweiten Personensicherheitsmodul, vorzugsweise unter Verwendung des zweiten Abstandssignals erfolgt.

In einer bevorzugten Weiterbildung wird das Senden eines ersten Blinksignals mittels des ersten Personensicherheitsmoduls auch während der Messphase, vorzugsweise mehrfach, durchgeführt. Somit kann erreicht werden, dass außerhalb der Messphase in den ersten Empfangsbereich eintretende Personensicherheitsmodule erkannt werden können. Besonders bevorzugt wird für einen vorbestimmten Zeitraum nach dem Senden eines Blinksignals der erste Empfangsbereich der ersten Empfangseinheit für einen vorbestimmten Zwischenzeitraum überwacht. Vorzugsweise entspricht der Zwischenzeitraum dabei einem maximalen Antwortzeitraum oder kürzer oder länger, den ein eintretendes weiteres Personensicherheitsmodul zum Senden eines Blinkantwortsignals benötigt.

Vorzugsweise wird das Senden eines ersten Blinksignals mittels des ersten Personensicherheitsmoduls zyklisch mit einer konstanten oder variierenden Blinkzeitwiederholrate wiederholt. Dies ist insbesondere wünschenswert, wenn weitere Schritte des Warnverfahrens in zeitlicher Abhängigkeit zum Sendes des ersten Blinksignals durchgeführt werden. Beispielsweise kann ein Beginn des Detektionszeitraum, in dem der erste Empfangsbereich überwacht wird, in Abhängigkeit von einem Zeitpunkt des Sendens des ersten Blinksignals definiert werden. Ferner können auch andere Personensicherheitsmodule verschiedene Schritte in Abhängigkeit des Zeitpunkts des Sendens von Blinksignalen durchführen. Mittels zyklisch wiederholter Blinksignale kann somit eine besonders einfache Synchronisation mehrerer Personensicherheitsmodule erreicht werden. Andere Mittel oder Verfahren zur Synchronisation können aber ebenso eingesetzt werden und sind im Rahmen der Erfindung bevorzugt. Beispielsweise kann die Blinkzeitwiederholrate vorzugsweise entgegengesetzt proportional zum jeweils zuletzt ermittelten Abstand definiert werden. Wenn also der Abstand zwischen zwei Personensicherheitsmodulen abnimmt, steigt die Blinkzeitwiederholrate um einen analogen relativen Betrag, vorzugsweise multipliziert mit einem Skalierungsfaktor, an. Ferner bevorzugt kann ein Mastermodul vorgesehen sein, das dazu ausgebildet ist, den Erkennungszeitraum und/oder den Detektionszeitraum und/oder einen anderen Zeitraum für ein oder mehrere Personensicherheitsmodule zu definieren. Beispielsweise kann das Mastermodul dazu ausgebildet sein, einem ersten Personensicherheitsmodul einen Blinkzeitpunkt, zu dem das Personensicherheitsmodul das Blinksignal sendet, vorzugeben, und den Erkennungszeitraum eines zweiten Personensicherheitsmoduls derart vorzugeben, dass dieses zweite Personensicherheitsmodul das Blinksignal erfasst.

In einer bevorzugten Weiterbildung ist eine Detektionsphasendauer der Detektionsphase größer oder gleich der Blinkzeitwiederholrate. Damit kann sichergestellt werden, dass zumindest ein Blinksignal eines Personensicherheitsmoduls detektiert wird, wenn sich dieses Personensicherheitsmodul in dem Empfangsbereich aufhält.

Vorzugsweise wird das Überwachen des Empfangsbereichs der Empfangseinheit für den Fall, dass in der Detektionsphase ein zweites Blinksignal detektiert wird, mit einem ersten Zeitabstand zum Detektieren des zweiten Blinksignals eingeleitet, und für den Fall, dass in der Detektionsphase ein zweites Blink-Antwortsignal detektiert wird, das Überwachen des Empfangsbereichs der Empfangseinheit mit einem zweiten Zeitabstand zum Detektieren des zweiten Blink-Antwortsignals eingeleitet. Wenn also vorzugsweise das erste Personensicherheitsmodul den Tag-Status gesetzt hat, wird das Überwachen des Empfangsbereichs mit dem ersten Zeitabstand eingeleitet. Ebenso bevorzugt wird das Überwachen des Empfangsbereichs mit dem zweiten Zeitabstand eingeleitet, wenn der Anchor-Status gesetzt ist. Dies kann vorteilhaft sein, wenn die Schritte die das Personensicherheitsmodul während einer oder der Messphase ausführt von dem gesetzten Status beeinflusst sind. So kann beispielsweise wenn der Tag-Status gesetzt wird zunächst auf ein Laufzeitsignal oder ein anderes Signal eines anderen Personensicherheitsmoduls gewartet werden, sodass das Überwachen zu einem früheren/späteren Zeitpunkt erfolgen muss als für den Fall, wenn der Anchor-Status gesetzt ist. Vorzugsweise kann auch das Blinksignal bereits zum Ermitteln des Abstands geeignet sein.

In einer bevorzugten Ausführungsform entspricht der erste Zeitabstand der Blinkzeitwiederholrate und/oder der zweite Zeitabstand der Blinkzeitwiederholrate. Hierdurch kann eine besonders einfache Synchronisation mehrerer Personensicherheitsmodule erreicht werden. Insbesondere ist dies der Fall, wenn das erste Personensicherheitsmodul nach einer Blinkzeitwiederholrate ein Laufzeitsignal aussendet und ein zweites Personensicherheitsmodul nach dem ersten Zeitabstand das Überwachen beginnt. Damit kann sichergestellt werden, dass das Laufzeitsignal des ersten Personensicherheitsmoduls zuverlässig von dem zweiten Personensicherheitsmodul empfangen werden kann. Bevorzugt sind der erste Zeitabstand und der zweite Zeitabstand identisch oder nahezu identisch.

Vorzugsweise wird die Abstandsbestimmungsoperation in der Messphase mehrfach durchgeführt. Hierdurch kann sichergestellt werden, dass Änderungen des Abstands zwischen dem ersten Personensicherheitsmodul und dem zweiten Personensicherheitsmodul mit einer ausreichenden Genauigkeit ermittelt werden. Ferner kann ein Abstand zwischen aufeinanderfolgenden Detektionsphasen, die vergleichsweise energieintensiv sind, erhöht werden. Besonders bevorzugt wird die Abstandsbestimmungsoperation in einer oder der Messphase mit einem Messabstand zyklisch und/oder auf Anforderung wiederholt, wodurch ein zuverlässiges Erfassen von Änderungen, eine einfache Synchronisation von mehreren Personensicherheitsmodulen und/oder besonders einfache Ausgestaltung der Codemittel erreicht. Besonders bevorzugt entspricht der Messabstand dem ersten Zeitabstand und/oder dem zweiten Zeitabstand.

Gemäß einer bevorzugten Weiterbildung wird der Messabstand unter Verwendung des während einer vorhergegangenen Abstandsbestimmungsoperation ermittelten Abstands zwischen dem ersten Personensicherheitsmodul und dem zweiten Personensicherheitsmodul definiert. Vorzugsweise wird der Messabstand mit sinkendem Abstand verringert. Beispielsweise kann bei einem Abstand zwischen dem ersten und zweiten Personensicherheitsmodul von 15 m ein Messabstand von 0,5 s gewählt werden, während für einen vorhergehend ermittelten Abstand von 5 m ein Messabstand von 0,1 s gewählt wird. Vorzugsweise wird der Messabstand unter Verwendung von zumindest zwei Abstandsbereichen definiert, in die der während der vorhergegangenen Abstandsbestimmungsoperation ermittelte Abstand eingeordnet wird. Vorzugsweise umfasst ein erster Abstandsbereich einen Abstand von 0 bis 4 m und ein zweiter Abstandsbereich einen Abstandsbereich von größer 4 m bis 10 m. Es soll verstanden werden, dass auch andere erste Abstandsbereich von 0m bis 1m, 0m bis 1,5m, 0m bis 2m, 0m bis 3m, 0m bis 3,5m oder 0m bis 5m bevorzugt sind. Vorzugsweise wird für den Messabstand ein erster Wert gewählt, wenn der ermittelte Abstand in dem ersten Abstandsbereich liegt, und ein zweiter Wert gewählt, wenn der ermittelte Abstand in dem zweiten Abstandsbereich liegt.

Bevorzugt wird der Messabstand unter Verwendung von Zustandssensordaten definiert, die von einem Zustandssensor des ersten Personensicherheitsmoduls bereitgestellt werden. Besonders bevorzugt ist der Zustandssensor ein Beschleunigungssensor und/oder Geschwindigkeitssensor und/oder Ortssensor (GPS) und/oder Magnetfeldsensor, wobei der Messabstand mit steigenden Beschleunigungswerten und/oder Geschwindigkeitswerten, die von dem Zustandssensor ermittelt werden, vorzugsweise reduziert wird. Hohe Beschleunigungswerte und hohe Geschwindigkeitswerte, die von dem Zustandssensor oder einer Steuereinheit des Personensicherheitsmoduls unter Verwendung des Zustandssensors oder anderen Sensoren ermittelt werden oderdiesen bereitgestellt werden, weisen auf hohe Bewegungsgeschwindigkeiten des Personensicherheitsmoduls hin. Somit verändert sich auch ein Abstand zwischen Personensicherheitsmodulen mit größeren Änderungsraten, sodass ein geringer Messabstand vorteilhaft ist, um einen aktuellen und präzisen Abstand zu ermitteln. Vorzugsweise kann der Zustandssensor auch ein Radarsensor, Lidarsensor und/oder eine Kamera, besonders bevorzugt eine Stereokamera sein.

In einer bevorzugten Weiterbildung weist das Warnverfahren eine Warnphase auf, mit den Schritten: Vergleichen des ermittelten Abstands zwischen dem ersten Personensicherheitsmodul und dem zweiten Personensicherheitsmodul mit einem ersten Abstandsgrenzwert, und Durchführen einer ersten Folgeoperation, wenn Ermittelt wird, dass der Abstand zwischen dem ersten Personensicherheitsmodul und dem zweiten Personensicherheitsmodul den ersten Abstandsgrenzwert unterschreitet. Vorzugsweise umfasst die erste Folgeoperation ein Bereitstellen eines ersten Warnsignals. So kann mittels des Verfahrens nicht nur ein Abstand ermittelt werden, sondern zusätzlich ein Nutzer des ersten Personensicherheitsmoduls gewarnt werden, wenn der Abstand zu einem zweiten Personensicherheitsmodul einen Grenzwert unterschreitet.

Bevorzugt weist die Warnphase ferner auf: Vergleichen des ermittelten Abstands zwischen dem ersten Personensicherheitsmodul und dem zweiten Personensicherheitsmodul mit einem zweiten Abstandsgrenzwert, der größer ist als der erste Abstandsgrenzwert, und Durchführen einer zweiten Folgeoperation, wenn Ermittelt wird, dass der Abstand zwischen dem ersten Personensicherheitsmodul und dem zweiten Personensicherheitsmodul den zweiten Abstandsgrenzwert unterschreitet. Vorzugsweise unterscheidet sich die zweite Folgeoperation von der ersten Folgeoperation. Beispielsweise kann im Rahmen der zweiten Folgeoperation ein Messabstand angepasst werden. Vorzugsweise umfasst die zweite Folgeoperation ein Bereitstellen eines zweiten Warnsignals und/oder des ersten Warnsignals.

Gemäß einer bevorzugten Ausführungsform gibt das erste Personensicherheitsmodul in Antwort auf das zweite Warnsignal einen optischen, akustischen und/oder taktilen Warnreiz aus und in Antwort auf das erste Warnsignal einen optischen, akustischen und/oder taktilen Warnreiz und einen akustischen, optischen und/oder taktilen Warnreiz aus. Hierdurch kann eine Wahrnehmbarkeit des Warnreizes gesteigert werden. So wird bei noch etwas größeren Abstand zwischen dem ersten Personensicherheitsmodul und dem zweiten Personensicherheitsmodul zunächst nur optisch gewarnt. Ein optisches Warnen wird dabei als weniger störend empfunden sodass, Akzeptanzprobleme vermieden werden können. Erst wenn beispielsweise der Abstand den kritischen ersten Abstandsgrenzwert unterschreitet wird auch ein akustischer Warnreiz, beispielsweise ein lautes Piepen ausgegeben. Wurde der Warnreiz des zweiten Warnsignals nicht wahrgenommen, kann eine Wahrnehmbarkeit weiter erhöht werden. Ferner können auch andere Kombinationen von Warnreizen bevorzugt sein. Beispielsweise kann das zweite Warnsignal eine Vibration des Personensicherheitsmoduls bedingen und das erste Warnsignal dann einen akustischen und optischen Reiz.

Das Computerprogrammprodukt kann sowohl auf einem Datenträger gespeichert und bereitgestellt werden, wie beispielsweise auf einem flüchtigen oder nicht-flüchtigen Datenträger. Es kann aber auch als Download bereitgestellt werden beispielsweise über einen Cloud-Dienst. Vorzugsweise wird das Computerprogrammprodukt in Form einer Applikation für ein mobiles Endgerät, wie beispielsweise ein Mobiltelefon oderTablet bereitgestellt.

In einem dritten Aspekt löst die Erfindung die eingangs genannte Aufgabe mit einem Personensicherheitsmodul zum Abstandsermitteln, aufweisend: eine Empfangseinheit, eine Sendeeinheit, eine Energieversorgungseinheit zum Versorgen des Personensicherheitsmoduls mit elektrischer Energie, und eine Steuereinheit mit einer Recheneinheit und einem Speicher, in welchem das Computerprogrammprodukt gemäß einer der vorstehend beschriebenen Ausführungsformen gemäß dem ersten Aspekt der Erfindung oder gemäß dem zweiten Aspekt der Erfindung gespeichert ist, wobei die Recheneinheit zum Ausführen der Codemittel des Computerprogrammprodukts ausgebildet ist. Es soll verstanden werden, dass die Computerprogrammprodukte gemäß dem ersten und zweiten Aspekt sowie das Personensicherheitsmodul gemäß dem dritten Aspekt der Erfindung gleiche und ähnliche Unteraspekte haben, wie sie insbesondere in den abhängigen Ansprüchen niedergelegt sind, sodass auch für die weiteren bevorzugten Ausführungsformen des Personensicherheitsmoduls vollumfänglich auf die obige Beschreibung zum ersten und zweiten Aspekt der Erfindung Bezug genommen wird. Die Sendeeinheit des Personensicherheitsmoduls ist vorzugsweise eine UWB-Sendeeinheit und/oder die Empfangseinheit ist vorzugsweise eine UWB-Empfangseinheit. Ultrabreitbandsignale, die auch als UWB-Signale bezeichnet werden, sind elektromagnetische Signale mit einer Bandbreite von mindestens 500 MHz. UWB-Signale ermöglichen eine besonders energieeffiziente Abstandsbestimmung und sind daher bevorzugt. Vorzugsweise ist zumindest eines der mittels der Sendeeinheit von dem Personensicherheitsmodul gesendeten Signale ein UWB-Signal. Ebenso bevorzugt ist zumindest eines der mittels der Empfangseinheit von dem Personensicherheitsmodul empfangenes Signal ein UWB-Signal. Besonders bevorzugt sind die Signale der Abstandsmessoperation UWB-Signale.

Vorzugsweise weist das Personensicherheitsmodul eine Energiegewinnungseinheit, die zum kabellosen Gewinnen von elektrischer Energie ausgebildet ist. Beispielsweise kann die Energiegewinnungseinheit eine Induktionsschleife sein. Eine kabellose Energiegewinnungseinheit ermöglicht dabei ein Laden der Energieversorgungseinheit während des Betriebs, sodass sich ein Benutzer des Personensicherheitsmoduls auch während des Ladens bewegen kann. Hierdurch kann eine Einsatzzeit des Personensicherheitsmoduls in vorteilhafter Weise erhöht werden.

Gemäß einer bevorzugten Ausgestaltung ist das Personensicherheitsmodul eine Mobileinheit, insbesondere ein Mobiltelefon. Mobiltelefone haben eine große Verbreitung in der Bevölkerung, sodass eine umfassende Abstandsmessung zwischen möglichst vielen Personen erreicht werden kann. Vorzugsweise ist das Computerprogramm dann eine auf dem Mobiltelefon gespeicherte App-Anwendung. Besonders bevorzugt ist das Mobiltelefon zum Bereitstellen von UWB-Signalen ausgebildet. So ist beispielsweise das Modell "iPhone 11" der Fa. Apple Inc., USA, mit einem UWB-Modul ausgestattet und kann das Verfahren ausführen. UWB-Signale (Ultrabreitband-Signale) lassen sich besonders einfach einsetzen, um eine Abstandmessung durchzuführen. Auch in den Modellen anderer Hersteller sind UWB-Sende-Empfangseinrichtungen vorgesehen, sodass mit einem solchen Mobiltelefon das Warnverfahren in besonders energieeffizienter Weise durchgeführt werden kann. Zusätzlich kann vorgesehen sein, dass die Abstandsmessung mittels weiterer Funkverfahren beispielsweise unter Verwendung von NFC-Kommunikation und/oder Bluetooth®-Kommunikation verbessert und/oder verifiziert wird.

In einem vierten Aspekt löst die Erfindung die eingangs genannte Aufgabe mit einem Kleidungsstück, insbesondere Arbeits-Kleidungsstück, aufweisend ein Personensicherheitsmodul gemäß dem dritten Aspekt der Erfindung. Es soll verstanden werden, dass die Computerprogrammprodukte gemäß dem ersten und zweiten Aspekt, das Personensicherheitsmodul gemäß dem dritten Aspekt und das Kleidungsstück gemäß dem vierten Aspekt der Erfindung gleiche und ähnliche Unteraspekte haben, wie sie insbesondere in den abhängigen Ansprüchen niedergelegt sind, sodass auch für die weiteren bevorzugten Ausführungsformen des Kleidungsstücks vollumfänglich auf die obige Beschreibung zum ersten, zweiten und dritten Aspekt der Erfindung Bezug genommen wird.

Vorzugsweise ist das Kleidungsstück eine Warnweste. Warnwesten sind bereits gut sichtbar und haben eine große Verbreitung. Durch eine Integration des Personensicherheitsmoduls kann zusätzlich eine Abstandsbestimmungsfunktion erreicht werden. In einer bevorzugten Ausgestaltung ist das Kleidungsstück ein Gürtel oder ein Schuh. Schuhe und Gürtel ermöglichen dabei ein unauffälliges Vorsehen eines Personensicherheitsmoduls und/oder einen hohen Tragekomfort.

Gemäß einem fünften Aspekt löst die Erfindung die eingangs genannte Aufgabe mit einem Sicherheitssystem zum Durchführen eines Warnverfahrens, aufweisend ein erstes Personensicherheitsmodul, mit einer ersten Steuereinheit, einer ersten Empfangseinheit und einer ersten Sendeeinheit, und ein zweites Personensicherheitsmodul, mit einer zweiten Steuereinheit, einer zweiten Empfangseinheit und einer zweiten Sendeeinheit. Darüber hinaus können weitere Personensicherheitsmodul vorgesehen sein, die vorzugsweise ebenso wie die ersten und zweiten Personensicherheitsmodule aufgebaut und ausgestattet sind, wobei sie sich in Einzelheiten unterscheiden können und insbesondere nicht identisch sein müssen. Beispielsweise kann das erste Personensicherheitsmodul in Form einer Warnweste ausgebildet sein und das zweite Personensicherheitsmodul als Mobiltelefon. Vorzugsweise ermitteln das erste Personensicherheitsmodul und/oder das zweite Personensicherheitsmodul den Abstand unter Verwendung eines Double-Sided Two Way Ranging Verfahrens durch. Vorzugsweise sendet das erste Personensicherheitsmodul in Antwort auf ein Detektieren des zweiten Laufzeitantwortsignals ein erstes Laufzeitantwortsignal.

Die erste Steuereinheit ist vorzugsweise dazu ausgebildet, in einer ersten Detektionsphase die erste Sendeeinheit zum Senden eines ersten Blinksignals anzusteuern und/oder vorzugsweise einen ersten Empfangsbereich mittels der ersten Empfangseinheit für einen ersten Erkennungszeitraum zu überwachen. Die zweite Steuereinheit ist vorzugsweise dazu ausgebildet, in einer zweiten Detektionsphase die zweite Sendeeinheit zum Senden eines zweiten Blinksignals anzusteuern und/oder vorzugsweise einen zweiten Empfangsbereich mittels der zweiten Empfangseinheit für einen zweiten Erkennungszeitraum zu überwachen. Die erste Steuereinheit ist vorzugsweise ferner dazu ausgebildet, einen ersten Tag-Status für das erste Personensicherheitsmodul zu setzen sowie vorzugsweise die erste Sendeeinheit oder eine andere Einheit zum Senden eines ersten Blinkantwortsignals oder eines anderen Antwortsignals anzusteuern, wenn in der ersten Detektionsphase vor dem Senden des ersten Blinksignals das zweite Blinksignal im ersten Empfangsbereich detektiert wird, und einen ersten Anchor-Status für das erste Personensicherheitsmodul zu setzen, wenn in der ersten Detektionsphase ein zweites Blinkantwortsignal des zweiten Personensicherheitsmoduls empfangen wird. Die zweite Steuereinheit ist vorzugsweise dazu ausgebildet, einen zweiten Tag-Status für das zweite Personensicherheitsmodul zu setzen sowie die zweite Sendeeinheit oder eine andere Einheit zum Senden eines zweiten Blinkantwortsignals oder eines anderen Antwortsignals anzusteuern, wenn in der zweiten Detektionsphase vor dem Senden des zweiten Blinksignals das erste Blinksignal im zweiten Empfangsbereich detektiert wird, und vorzugsweise einen zweiten Anchor-Status für das zweite Personensicherheitsmodul zu setzen, wenn in der zweiten Detektionsphase ein erstes Blinkantwortsignal des ersten Personensicherheitsmoduls empfangen wird. Die erste Steuereinheit und die zweite Steuereinheit sind vorzugsweise dazu ausgebildet, in einer sich an die erste Detektionsphase anschließenden ersten Messphase gemeinsam mittels Laufzeitmessung einen Abstand zwischen dem ersten und zweiten Personensicherheitsmodul zu ermitteln. Die Laufzeitmessung erfolgt vorzugsweise unter Verwendung von UWB-Signalen. Es soll verstanden werden, dass das Personensicherheitsmodul auch mehrere Sendeeinheiten, vorzugsweise zum Senden von Signalen in verschiedenen Frequenzbereichen, aufweisend kann. So kann eine erste Sendeeinheit beispielsweise eine Bluetooth-Sendeeinheit sein, und eine zweite Sendeeinheit eine UWB-Sendeeinheit. Ferner kann das Personensicherheitsmodul aber auch mehrere Sendeeinheiten für den gleichen Frequenzbereich aufweisen. In analoger weise können auch mehrere Empfangseinheiten vorgesehen sein.

Ein hierin beschriebenes System umfasst vorzugsweise wenigsten zwei Personensicherheitsmodule, die jeweils die Fähigkeit haben als Anchor und als Tag zu agieren und den Abstand zueinander zu bestimmten. Bei Unterschreiten eines Mindestabstands wird ein Warnsignal ausgegeben, vorzugsweise mittels der Personensicherheitsmodule oder durch diese veranlasst.

Es soll verstanden werden, dass die Computerprogrammprodukte gemäß dem ersten und zweiten Aspekt, das Personensicherheitsmodul gemäß dem dritten Aspekt, das Kleidungsstück gemäß dem vierten Aspekt und das Sicherheitssystem gemäß dem fünften Aspekt der Erfindung gleiche und ähnliche Unteraspekte haben, wie sie insbesondere in den abhängigen Ansprüchen niedergelegt sind, sodass auch für die weiteren bevorzugten Ausführungsformen des Sicherheitssystems vollumfänglich auf die obige Beschreibung zum ersten, zweiten, dritten und vierten Aspekt der Erfindung Bezug genommen wird.

In einer ersten bevorzugten Weiterbildung des Sicherheitssystems ist die erste Steuereinheit dazu ausgebildet, in einer an die erste Detektionsphase, vorzugsweise unmittelbar, anschließenden ersten Messphase ein erstes Laufzeitsignal zu senden, den ersten Empfangsbereich mittels der ersten Empfangseinheit für einen ersten Detektionszeitraum zu überwachen, vorzugsweise ein von dem zweiten Personensicherheitsmodul gesendetes zweites Laufzeitantwortsignal zu empfangen, und/oder vorzugsweise einen Abstand zwischen dem ersten Personensicherheitsmodul und dem zweiten Personensicherheitsmodul unter Verwendung des zweiten Laufzeitantwortsignals oder eines anderen Signals zu ermitteln und zwar vorzugsweise für den Fall, dass der erste Anchor-Status gesetzt ist. Die erste Steuereinheit ist vorzugsweise ferner dazu ausgebildet, den ersten Empfangsbereich mittels der ersten Empfangseinheit für den ersten Detektionszeitraum zu überwachen, vorzugsweise ein von dem zweiten Personensicherheitsmodul gesendetes zweites Laufzeitsignal zu empfangen, und vorzugsweise in Antwort auf das Empfangen des zweiten Laufzeitsignals oder eines anderen Signals die erste Sendeeinheit zum Senden eines ersten Laufzeitantwortsignals anzusteuern und zwar vorzugsweise für den Fall, dass der erste Tag-Status gesetzt ist. Dasselbe gilt vorzugsweise in analoger Weise für die zweite Steuereinheit. Ferner bevorzugt kann die Steuereinheit auch zum Ermitteln des Abstands unter Verwendung zweier in definierter räumlicher Beziehung zueinander angeordneter Empfangseinheiten ausgebildet sein, wobei das Ermitteln des Abstands vorzugsweise mittels Triangulation erfolgt.

Vorzugsweise ist die erste Steuereinheit dazu ausgebildet, das Überwachen des ersten Empfangsbereichs nur für den ersten Detektionszeitraum und/oder für den ersten Erkennungszeitraum durchzuführen, und/oder vorzugsweise ist die zweite Steuereinheit dazu ausgebildet, das Überwachen des zweiten Empfangsbereichs nur für den zweiten Detektionszeitraum und/oder für den zweiten Erkennungszeitraum durchzuführen.

Ferner bevorzugt ist die erste Steuereinheit dazu ausgebildet, den ersten Detektionszeitraum so zu definieren, dass dieser kürzer ist als der erste Erkennungszeitraum, und/oder ist die zweite Steuereinheit dazu ausgebildet, den zweiten Detektionszeitraum so zu definieren, dass dieser kürzer ist als der zweite Erkennungszeitraum.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung der bevorzugten Ausführungsformen sowie anhand der Zeichnungen. Diese zeigen in:
- Figur 1: eine schematische Darstellung eines ersten Ausführungsbeispiels für ein Warnverfahren;
- Figur 2: eine schematische Darstellung eines zweiten Ausführungsbeispiels für ein Warnverfahren;
- Figur 3: eine Darstellung, welche den Signalaustausche zwischen einem ersten Personensicherheitsmodul und einem zweiten Personensicherheitsmodul in einer ersten Detektionsphase illustriert;
- Figur 4: eine schematische Darstellung von vier räumlich beabstandet zueinander angeordneten Personensicherheitsmodulen;
- Figur 5: eine schematische Detailansicht eines Personensicherheitsmoduls;
- Figur 6: eine Warnweste, die mit einem Personensicherheitsmodul ausgestattet ist,
- Figur 7: ein Mobiltelefon, das als Personensicherheitsmodul fungiert;
- Figur 8: einen Gürtel, der mit einem Personensicherheitsmodul ausgestattet ist, und
- Figur 9: einen Schuh, der mit einem Personensicherheitsmodul ausgestattet ist.

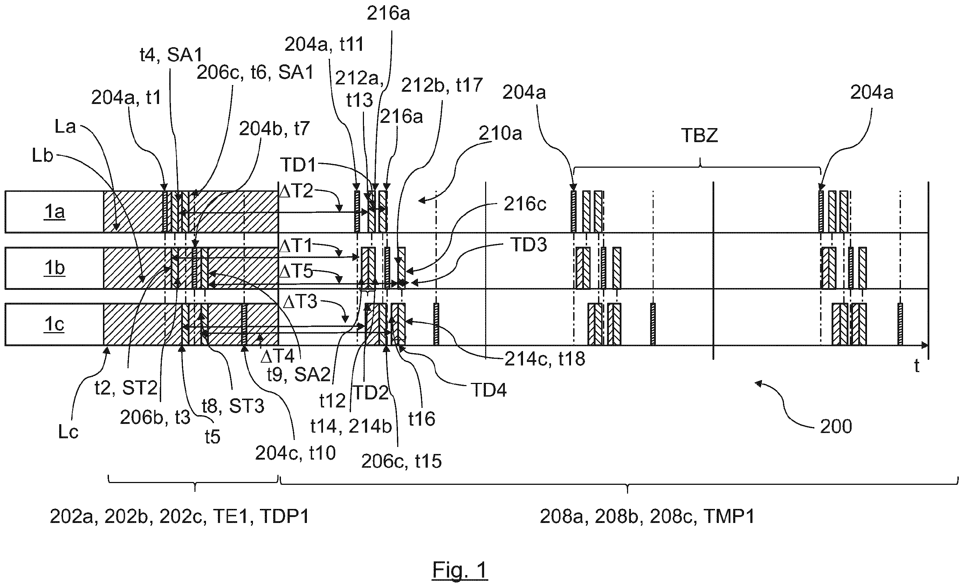

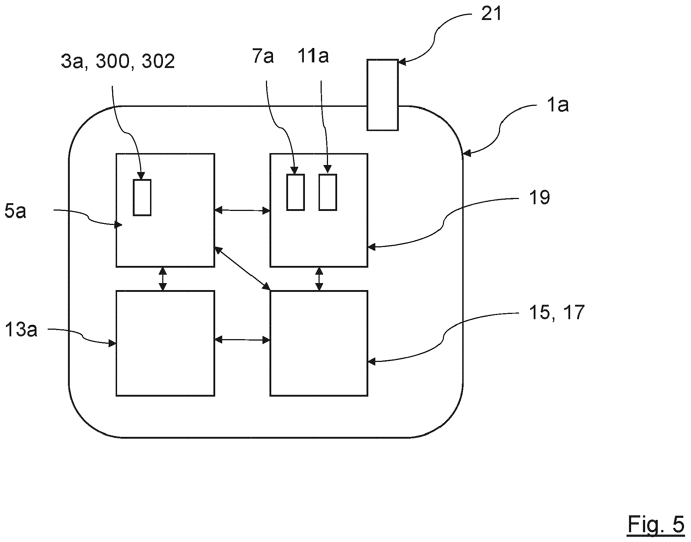

Figur 1 verdeutlicht ein Warnverfahren 200 das von einem ersten Personensicherheitsmodul 1a ausgeführt wird, wenn Codemittel 302 (vgl. Fig. 5) eines Computerprogrammprodukts 300 auf einer ersten Recheneinheit 3a des ersten Personensicherheitsmoduls 1a ausgeführt werden. Weiterhin verdeutlicht Figur 1 das Ausführen des Warnverfahrens 200 auf einem zweiten Personensicherheitsmodul 1b und einem dritten Personensicherheitsmodul 1c. Zusammen bilden das erste Personensicherheitsmodul 1a, das zweite Personensicherheitsmodul 2b und das dritte Personensicherheitsmodul 1c ein Sicherheitssystem 100. Ein Zeitablauf des Warnverfahrens 200 wird mittels der in Fig. 1 horizontal verlaufenden Zeitachse t verdeutlicht. Die von den jeweiligen Personensicherheitsmodulen 1a, 1 b, 1c durchgeführten Schritte werden entlang der von den Personensicherheitsmodulen 1a, 1b, 1c ausgehenden Linien La, Lb, Lc dargestellt. Zeitgleich zueinander stattfindende Verfahrensschritte, die von den Personensicherheitsmodulen 1a, 1b, 1c durchgeführt werden, sind in vertikaler Richtung versetzt angeordnet dargestellt.

In diesem Ausführungsbeispiel führen das erste Personensicherheitsmodul 1a, das zweite Personensicherheitsmodul 1b und das dritte Personensicherheitsmodul 1c zeitgleich eine erste Detektionsphase 202a, eine zweite Detektionsphase 202b, und eine dritte Detektionsphase 202c durch. Während der ersten Detektionsphase 202a überwacht eine erste Steuereinheit 5a des ersten Personensicherheitsmoduls 1a mittels einer ersten Empfangseinheit 7a einen ersten Empfangsbereich 9a der ersten Empfangseinheit 7a. Hier ist ein erster Erkennungszeitraum TE1 gleich einer ersten Detektionsphasendauer TDP1 der ersten Detektionsphase 202a. Das heißt der erste Empfangsbereich 9a der ersten Empfangseinheit 7a wird während der gesamten ersten Detektionsphase 202a von der ersten Steuereinheit 5a überwacht. In analoger Weise werden auch zweite und dritte Empfangsbereiche von zweiten und dritten Empfangseinheiten (nicht dargestellt) der zweiten und dritten Personensicherheitsmodule 1b, 1c überwacht.

Zu einem ersten Zeitpunkt t1 innerhalb der ersten Detektionsphase 202a steuert die erste Steuereinheit 5a eine erste Sendeeinheit 11a des ersten Personenmoduls 1a derart an, dass mittels der ersten Sendeeinheit 11a ein erstes Blinksignal 204a gesendet wird. In diesem Ausführungsbeispiel Detektiert das zweite Personensicherheitsmodul 1b zu einem zweiten Zeitpunkt t2 mittels der zweiten Empfangseinheit das erste Blinksignal 204a und sendet in Antwort auf das Detektieren des ersten Blinksignals 204a zu einem dritten Zeitpunkt t3 ein zweites Blinkantwortsignal 206b. Da das zweite Personensicherheitsmodul 1b hier im ersten Empfangsbereich 9a der ersten Empfangseinheit 7a angeordnet ist, detektiert die erste Steuereinheit 5a in einem vierten Zeitpunkt t4 mittels der ersten Empfangseinheit 7a das zweite Blinkantwortsignal 206b. Das zweite Blinkantwortsignal 206b enthält vorzugsweise einen zweiten Bezeichner, der das zweite Personensicherheitsmodul 1b identifiziert. Die erste Steuereinheit 5a speichert den zweiten Bezeichner in einem ersten Speicher 13a des ersten Personensicherheitsmoduls 13a ab. Ferner enthält auch das erste Blinksignal 204a einen ersten Bezeichner, der das erste Personensicherheitsmodul 1a identifiziert, wobei eine zweite Steuereinheit (nicht dargestellt, aber die Personensicherheitsmodule 1a, 1b, 1c sind identisch aufgebaut) den ersten Bezeichner in einem zweiten Speicher (nicht dargestellt) abspeichert.

Zu einem fünften Zeitpunkt t5 empfängt auch das dritte Personensicherheitsmodul 1c das erste Blinksignal 204a, speichert den ersten Bezeichner und sendet ein drittes Blinkantwortsignal 206c. In analoger Weise detektiert das erste Personensicherheitsmodul 1a in einem sechsten Zeitpunkt t6 das dritte Blinkantwortsignal 206c und speichert einen im dritten Blinkantwortsignal 206c enthaltenen dritten Bezeichner in dem ersten Speicher 13a ab.

Das zweite Personensicherheitsmodul 1c sendet zu einem siebten Zeitpunkt t7 ein zweites Blinksignal 204b, das ebenfalls den zweiten Bezeichner enthält. Das erste Personensicherheitsmodul 1c detektiert das zweite Blinksignal 204b mittels der ersten Empfangseinheit 7a. Da der zweite Bezeichner aber bereits in dem Speicher 13a des ersten Personensicherheitsmoduls 1a gespeichert ist, sendet das erste Personensicherheitsmodul 1a kein erstes Blinkantwortsignal 206a. Zu einem achten Zeitpunkt t8 detektiert das dritte Personensicherheitsmodul 1c das zweite Blinksignal 204b und speichert den zweiten Bezeichner in einem dritten Speicher (nicht dargestellt) des dritten Personensicherheitsmoduls 1c ab.

In Antwort auf das Detektieren des zweiten Blinksignals 204b sendet das dritte Personensicherheitsmodul 1c ein drittes Blinkantwortsignal 206c, das den dritten Bezeichner enthält und zu einem neunten Zeitpunkt t9 von dem zweiten Personensicherheitsmodul 1b mittels der zweiten Empfangseinheit (nicht dargestellt) detektiert wird. Daraufhin speichert auch das zweite Personensicherheitsmoduls 1b den dritten Bezeichner in einem zweiten Speicher (nicht dargestellt) ab.

Zu einem zehnten Zeitpunkt t10 sendet das dritte Personensicherheitsmodul 1c in analoger Weise ein drittes Blinksignal 204c. Das dritte Blinksignal 204c wird von dem ersten Personensicherheitsmodul 1a und dem zweiten Sicherheitsmodul 2b detektiert. Da der dritte Bezeichner aber bereits in dem ersten Speicher 13a des ersten Sicherheitsmoduls 1a und dem zweiten Speicher des zweiten Personensicherheitsmoduls 1b gespeichert ist, senden diese keine ersten und zweiten Blinkantwortsignale 206a, 206b.

In diesem Ausführungsbeispiel sendet also zuerst das erste Personensicherheitsmodul 1a das erste Blinksignal 204a und detektiert in Antwort darauf das von dem zweiten Personensicherheitsmodul 1b bereitgestellte zweite Blinkantwortsignal 206b sowie das von dem dritten Personensicherheitsmodul 1c gesendete dritte Blinkantwortsignal 206c. Die erste Steuereinheit 5a ist dazu ausgebildet, zu ermitteln, dass das zweite Blinkantwortsignal 206b und das dritte Blinkantwortsignal 206c in Antwort auf das Senden des ersten Blinksignals 204a erfolgt. Da dies hier der Fall ist, setzt die erste Steuereinheit 5a des ersten Personensicherheitsmodul 1a sich für eine Beziehung zum zweiten Personensicherheitsmodul 1b einen ersten Anchor-Status SA1 und in analoger Weise für eine Beziehung zum dritten Personensicherheitsmodul 1c ebenfalls den ersten Anchor-Status SA1. Die Wirkungsweise des Status wird an späterer Stelle erläutert.

Das erste Personensicherheitsmodul 1a sendet hier kein erstes Blinkantwortsignal 206a aus, da es in Antwort auf das Detektieren des zweiten Blinksignals 204b ermittelt, dass der zweite Bezeichner, der das zweite Personensicherheitsmodul 1b kennzeichnet, bereits in dem ersten Speicher 13a des ersten Personensicherheitsmoduls 1a gespeichert ist. In analoger Weise ermittelt das erste Personensicherheitsmodul 1a auch beim Detektieren des dritten Blinksignals 204c, dass der dritte Bezeichner bereits gespeichert ist und sendet daher auch in Antwort auf dieses Detektieren kein erstes Blinkantwortsignal 206a.

Für das dritte Personensicherheitsmodul 1c ergibt sich in diesem Ausführungsbeispiel eine zum ersten Personensicherheitsmodul 1a gegensätzliche Rolle. Das dritte Personensicherheitsmodul 1c sendet sowohl in Antwort auf das Detektieren des ersten Blinksignals 204a als auch in Antwort auf das Detektieren des zweiten Blinksignals 204b das dritte Blinkantwortsignal 206c. Dabei ist das dritte Personensicherheitsmodul 1c dazu ausgebildet, zu ermitteln, ob ein in dem detektierten Signal enthaltener Bezeichner, der eine Quelle des Signals kennzeichnet, bereits in dem dritten Speicher (nicht dargestellt) des dritten Personensicherheitsmoduls 1c gespeichert ist. Da dies hier weder für den ersten Bezeichner des ersten Blinksignals 204a noch für den zweiten Bezeichner des zweiten Blinksignals 204b der Fall ist, setzt das dritte Personensicherheitsmodul 1c für eine Beziehung zum ersten Personensicherheitsmodul 1a einen dritten Tag-Status ST3 und auch für eine Beziehung zum zweiten Personensicherheitsmodul 1b den dritten Tag-Status ST3. Das dritte Personensicherheitsmodul 1c setzt sich also für die beiden Beziehungen zu den beiden übrigen Personensicherheitsmodulen 1a, 1b den dritten Tag-Status ST3.

Das zweite Personensicherheitsmodul 1 b weist eine gemischte Rolle auf. Zunächst ist das zweite Personensicherheitsmodul 1b dazu ausgebildet, zu ermitteln, dass das zweite Blinkantwortsignal 206b in Antwort auf das Detektieren des ersten Blinksignals 204a des ersten Personensicherheitsmoduls 1a erfolgt und, dass der das erste Personensicherheitsmodul 1a kennzeichnende erste Bezeichner beim Detektieren des ersten Blinksignals 204a nicht gespeichert ist. Daher setzt die zweite Steuereinheit des zweiten Personensicherheitsmodul 1b für die Beziehung zum ersten Personensicherheitsmodul 1a einen zweiten Tag-Status ST2. In der Beziehung zwischen dem ersten Personensicherheitsmodul 1a und dem zweiten Personensicherheitsmodul 1b ist also dem ersten Personensicherheitsmodul der Anchor-Status SA und dem zweiten Personensicherheitsmodul 1b der Tag-Status ST zugewiesen.

Für eine Beziehung des zweiten Personensicherheitsmoduls 1b zu dem dritten Personensicherheitsmodul 1c ergibt sich eine abweichende Konstellation. Das dritte Personensicherheitsmodul 1c sendet das dritte Blinkantwortsignal 206c in Antwort auf das zweite Blinksignal 204b des zweiten Personensicherheitsmoduls 1b, wobei der zweite Bezeichner beim Detektieren des zweiten Blinksignals 204b durch das dritte Personensicherheitsmodul 1 c noch nicht gespeichert ist. Wie bereits erläutert hat also das dritte Personensicherheitsmodul 1c in der Beziehung zum zweiten Personensicherheitsmodul 1c den dritten Tag-Status ST3. Das zweite Personensicherheitsmodul 1b detektiert das dritte Blinkantwortsignal 206c und ermittelt, dass der dritte Bezeichner beim Detektieren noch nicht im zweiten Speicher des zweiten Personensicherheitsmoduls 1b gespeichert ist. Daraufhin setzt das zweite Personensicherheitsmodul 1b für die Beziehung zum dritten Personensicherheitsmodul 1c einen zweiten Anchor-Status SA2. Abhängig von der Beziehung zu den übrigen Personensicherheitsmodulen 1a,1c weist das zweite Personensicherheitsmodul 1b also voneinander abweichende Status auf. In der Beziehung zum ersten Personensicherheitsmodul 1a hat es den zweiten Tag-Status ST2 und für die Beziehung zum dritten Personensicherheitsmodul 1c den zweiten Anchor-Status SA2.

Es soll verstanden werden, dass alle Personensicherheitsmodule 1a, 1b, 1c dazu ausgebildet sind, für jede Beziehung zu einem anderen Personensicherheitsmodul 1a, 1b, 1c entweder den Tag-Status ST oder den Anchor-Status SA zu setzen. Welcher Status jeweils gesetzt wird, hängt davon ab, ob ein Blinkantwortsignal 206a, 206b, 206c eines anderen Personensicherheitsmoduls 1a, 1b, 1c in Antwort auf das Blinksignal 204a, 204b, 204c Detektiert wird, oder ob das jeweilige Personensicherheitsmodul 1a, 1b, 1c ein Blinkantwortsignal 206a, 206b, 206c in Antwort auf das Detektieren eines Blinksignals 204a, 204b, 204c eines jeweils anderen Personensicherheitsmoduls 1a, 1b, 1c sendet.

An die Detektionsphasen 202a, 202b, 202c schließen sich für die Personensicherheitsmodule 1a, 1b, 1c jeweilige Messphasen 208a, 208b, 208c an. Hier entspricht eine erste Messphasendauer TMP1 der ersten Messphase 208a des ersten Personensicherheitsmoduls 1a der dreifachen ersten DetektionsphasendauerTDP1. Messphasendauern der zweiten und dritten Personensicherheitsmodule 1b, 1c stimmen hier mit der ersten Messphasendauer TMP1 überein. Es kann aber auch vorgesehen sein, dass die Personensicherheitsmodule 1a, 1b, 1c verschiedene Detektionsphasendauern und/oder verschiedene Messphasendauern aufweisen. Ferner kann ein Verhältnis zwischen der Detektionsphasendauer und der Messphasendauer eines Personensicherheitsmoduls 1a, 1b, 1c beliebig gewählt sein. Vorzugsweise weist die Messphasendauer aber ein Wert auf, der ein ganzzahliges Vielfaches eines Werts der Detektionsphasendauer ist.

Wie Figur 1 zeigt, senden die Personensicherheitsmodule 1a, 1b, 1c ihre jeweiligen Blinksignale 204a, 204b, 204c auch in den jeweiligen Messphasen 208a, 208b, 208c. Die Blinksignale 204a, 204b, 204c werden dabei mit einer jeweils konstanten Blinkzeitwiederholrate TBZ gesendet. Hier stimmen die Blinkzeitwiederholraten TBZ der Blinksignale 204a, 204b, 204c überein. Ferner ist die Blinkzeitwiederholrate TBZ derart gewählt, dass der Zeitabstand zwischen zwei aufeinanderfolgenden Blinksignalen 204a, 204b, 204c eines Personensicherheitsmoduls 1a, 1b, 1c mit der ersten Detektionsphasendauer TDP1 übereinstimmt. Durch das wiederholte Senden des Blinksignale 204, 204b, 206c kann erreicht werden, dass auch neu in den Empfangsbereich der Personensicherheitsmodule 1a, 1b, 1c eintretende weitere Personensicherheitsmodule erfasst werden können bzw. auf die Blinksignale 204a, 204b, 204c reagieren können.

Das erste Personensicherheitsmodul 1a führt in der ersten Messphase 208a insgesamt drei erste Abstandsbestimmungsoperationen 210a durch. Zu einem elften Zeitpunkt t11 sendet das erste Personensicherheitsmodul 1a erneut das erste Blinksignal 204a. Zu einem dreizehnten Zeitpunkt t13 steuert die erste Steuereinheit 5a des ersten Personensicherheitsmoduls 1a die erste Sendeeinheit 11a zum Senden eines ersten Laufzeitsignals 212a an und initiiert damit die erste Messphase 208a. Das Senden des ersten Laufzeitsignals 212a erfolgt in fester zeitlicher Relation zum Senden des ersten Blinksignals 204a.

Das zweite Personensicherheitsmodul 1b beginnt um einen ersten Zeitabstand ΔT1 versetzt zum Detektieren des ersten Blinksignals 204a im zweiten Zeitpunkt t2 damit, den zweiten Empfangsbereich der zweiten Empfangseinheit des zweiten Personensicherheitsmoduls 1b zu überwachen. Dieses Überwachen beginnt zu einem zwölften Zeitpunkt t12 zwischen dem elften Zeitpunkt t11 und dem dreizehnten Zeitpunkt t13, sodass das zweite Personensicherheitsmodul 1b den zweiten Empfangsbereich bereits wieder überwacht, wenn das erste Personensicherheitsmodul 1a das erste Laufzeitsignal 212a sendet. Daher kann das erste Laufzeitsignal 212a von dem zweiten Personensicherheitsmodul 1b detektiert und verarbeitet werden. Zu einem vierzehnten Zeitpunkt t14 steuert die zweite Steuereinheit des zweiten Personensicherheitsmoduls 1b die zweite Sendeeinheit an, um in Antwort auf das Detektieren des ersten Laufzeitsignals 212a ein zweites Laufzeitantwortsignal 214b zu senden.

Das erste Personensicherheitsmodul 1a leitet um einen zweiten Zeitabstand ΔT2 versetzt zum Detektieren des zweiten Blinkantwort-Signals 206b, das im vierten Zeitpunkt t4 erfolgt, ein Überwachen des ersten Empfangsbereichs 9a mittels der ersten Empfangseinheit 7a ein. Der zweite Zeitabstand ΔT2 ist dabei so gewählt, dass das erste Personensicherheitsmodul 1a den ersten Empfangsbereich 9a bereits überwacht, wenn das zweite Personensicherheitsmodul 1b im vierzehnten Zeitpunkt t14 das zweite Laufzeitantwortsignal 214b sendet. Somit kann das zweite Laufzeitantwortsignal 214b von der ersten Steuereinheit 5a des ersten Personensicherheitsmoduls 1a mittels der ersten Empfangseinheit 7a detektiert werden. Unter Verwendung des zweiten Laufzeitantwortsignals 214b ermittelt die erste Steuereinheit 5a dann einen ersten räumlichen Abstand A1 zwischen dem ersten Personensicherheitsmodul 1a und dem zweiten Personensicherheitsmodul 1b. Hier sendet das erste Personensicherheitsmodul 1a in Antwort auf das Ermitteln des ersten räumlichen Abstands A1 ein erstes Abstandssignal 216a, das den ersten Abstand A1 repräsentiert an das zweite Personensicherheitsmodul 1 b, das daraufhin den ersten Abstand A1 unter Verwendung des ersten Abstandssignals 216a ermittelt.

Wenn ein erster Detektionszeitraum TD1 seit dem Einleiten des Überwachens des ersten Empfangsbereichs 9a mittels der ersten Empfangseinheit 7a abgelaufen ist, beendet die erste Steuereinheit 5a das Überwachen. Der erste Detektionszeitraum TD1 und der zweite Zeitabstand ΔT2 sind dabei derart gewählt, dass das zweite Laufzeitantwortsignal 214b zuverlässig erfasst wird. Gegenüber einem konstanten Überwachen des Empfangsbereichs 9a kann eine Energieeinsparung erreicht werden, wodurch eine maximale Betriebsdauer des ersten Personensicherheitsmoduls 1a erheblich gesteigert werden kann.

Das zweite Personensicherheitsmodul 1b beendet das Überwachen des zweiten Empfangsbereichs der zweiten Empfangseinheit des zweiten Personensicherheitsmoduls 1b, wenn ein zweiter Detektionszeitraum TD2 seit dem Einleiten des Überwachens des zweiten Empfangsbereichs abgelaufen ist. Der zweite Detektionszeitraum TD2 und der erste Zeitabstand ΔT1 sind dabei derart gewählt, dass das von dem ersten Personensicherheitsmodul 1a gesendete erste Laufzeitsignal 212a und das erste Abstandssignal 216a zuverlässig von dem zweiten Personensicherheitsmodul 1b detektiert werden können. Hier ist ein Wert des zweiten Detektionszeitraums TD2 größer als ein Wert des ersten Detektionszeitraums TD1. Es kann jedoch auch vorgesehen sein, dass die Detektionszeiträume TD1, TD2 identisch sind, oder dass der Wert des ersten Detektionszeitraums TD1 größer ist als der Wert des zweiten Detektionszeitraums TD2. Hier sind der erste Zeitabstand ΔT1 und der zweite Zeitabstand ΔT2 in etwa identisch und entsprechen der Blinkzeitwiederholrate TBZ beziehungsweise dem zeitlichen Abstand zweier aufeinanderfolgender erstes Blinksignale 204a.

Das dritte Personensicherheitsmodul 1c beginnt um einen dritten Zeitabstand ΔT3 versetzt zum Detektieren des ersten Blinksignals 204a, das im fünften Zeitpunkt t5 erfolgt, damit, den dritten Empfangsbereich der dritten Empfangseinheit des dritten Personensicherheitsmoduls 1c zu überwachen. Dieses Überwachen beginnt ebenfalls vor dem dreizehnten Zeitpunkt t13, sodass das dritte Personensicherheitsmodul 1c den dritten Empfangsbereich bereits wieder überwacht, wenn das erste Personensicherheitsmodul 1a das erste Laufzeitsignal 212a sendet. Daher kann das erste Laufzeitsignal 212a von dem dritten Personensicherheitsmodul 1c detektiert und verarbeitet werden. Zu einem fünfzehnten Zeitpunkt t15 steuert die dritte Steuereinheit des dritten Personensicherheitsmoduls 1c die dritte Sendeeinheit an, um in Antwort auf das Detektieren des ersten Laufzeitsignals 212a ein drittes Laufzeitantwortsignal 214c zu senden. Das dritte Laufzeitantwortsignal 214c wird in analoger Weise zum zweiten Laufzeitantwortsignal 214b von der ersten Steuereinheit 5a des ersten Personensicherheitsmoduls 1a mittels der ersten Empfangseinheit 7a detektiert, woraufhin die erste Steuereinheit einen zweiten Abstand A2 zwischen dem ersten Personensicherheitsmodul 1a und dem dritten Personensicherheitsmodul 1c ermittelt. Daraufhin sendet das erste Personensicherheitsmodul 1a ein zweites Abstandssignal 216b, das den zweiten Abstand A2 repräsentiert an das dritten Personensicherheitsmodul 1c. Das dritte Personensicherheitsmodul 1c ist dazu ausgebildet, aus dem zweiten Abstandssignal 216b den zweiten Abstand A2 zu ermitteln, sodass der zweite Abstand A2 auch am dritten Personensicherheitsmodul 1c vorliegt.

Für ein Bestimmen des Abstands zum ersten Personensicherheitsmodul 1a senden das zweite Personensicherheitsmodul 1 b und das dritte Personensicherheitsmodul 1c vorzugsweise keine zweiten und dritten Laufzeitsignale 212b, 212c an das erste Personensicherheitsmodul 1a, sondern warten vorzugsweise zunächst auf ein Detektieren des ersten Laufzeitsignals 212a, das von dem ersten Personensicherheitsmodul 1a gesendet wird. Daraufhin senden das erste und zweite Personensicherheitsmodul 1b, 1c dann da zweite Laufzeitantwortsignal 214b und das dritte Laufzeitantwortsignal 214c. Das zweite Personensicherheitsmodul 1b und das dritte Personensicherheitsmodul 1c warten vorzugsweise zunächst auf das erste Laufzeitsignal 212a des ersten Personensicherheitsmodul 1a, da diese in ihrer jeweiligen Beziehung zum ersten Personensicherheitsmodul 1a den Tag-status ST gesetzt haben. Da das erste Personensicherheitsmodul 1a den ersten Anchor-Status SA1 gesetzt hat, sendet es das erste Laufzeitsignal 212a.

Ein erster Bestandteil einer zweiten Abstandsbestimmungsoperationen 210b des zweiten Personensicherheitssystems 1b besteht vorzugsweise bereits darin, dass das zweite Laufzeitantwortsignal 214b an das erste Personensicherheitssignal gesendet wird. Ein zweiter Bestandteil der zweiten Abstandsbestimmungsoperation 210b des zweiten Personensicherheitsmoduls 1b besteht vorzugsweise darin, dass das zweite Personensicherheitsmodul 1b zu einem siebzehnten Zeitpunkt t17 ein zweites Laufzeitsignal 212b an das dritte Personensicherheitsmodul 1c sendet. Das Senden des zweiten Laufzeitsignals 212b erfolgt, da das zweite Personensicherheitsmodul 1b in der Beziehung zum dritten Personensicherheitsmodul 1c den zweiten Anchor-Status SA2 gesetzt hat. Das Senden des zweiten Laufzeitsignals 212b erfolgt in fester zeitlicher Relation zum Senden des zweiten Blinksignals 204b.

Das dritte Personensicherheitsmodul 1c leitet um einen vierten Zeitabstand ΔT4 versetzt zum Detektieren des zweiten Blinkantwort-Signals 206b, das im achten Zeitpunkt t8 erfolgt, ein Überwachen des dritten Empfangsbereichs 9c mittels der dritten Empfangseinheit ein.

Der vierte Zeitabstand ΔT4 ist hier identisch zum ersten Zeitabstand ΔT1 des zweiten Personensicherheitsmoduls 1b. Das Überwachen des dritten Empfangsbereichs beginnt zu einem sechzehnten Zeitpunkt t16, der vor dem siebzehnten Zeitpunkt t17 liegt, an dem das zweite Laufzeitsignal 212b von dem zweiten Personensicherheitsmodul 1b gesendet wird. Das zweite Laufzeitsignal 212b kann also von dem dritten Personensicherheitsmodul 1c detektiert und verarbeitet werden. Zu einem achtzehnten Zeitpunkt t18 steuert die dritte Steuereinheit des dritten Personensicherheitsmoduls 1c die dritte Sendeeinheit an, um vorzugsweise in Antwort auf das Detektieren des zweiten Laufzeitsignals 212b ein drittes Laufzeitantwortsignal 214c zu senden.

In analoger Weise zur ersten Abstandsbestimmungsoperation 210a des ersten Personensicherheitsmodul 1a leitet auch das zweite Personensicherheitsmodul 1b ein Überwachen des zweiten Empfangsbereichs des zweiten Personensicherheitsmoduls 1b ein. Das Einleiten erfolgt vorzugsweise um einen fünften Zeitabstand ΔT5 versetzt zum Detektieren des dritten Blinkantwort-Signals 206c am zweiten Personensicherheitsmodul 1b, das im neunten Zeitpunkt t9 erfolgt. Der fünfte Zeitabstand ΔT5 ist dabei vorzugsweise so gewählt, dass das zweite Personensicherheitsmodul 1b den zweiten Empfangsbereich bereits überwacht, wenn das dritte Personensicherheitsmodul 1c im achtzehnten Zeitpunkt t18 das dritte Laufzeitantwortsignal 214c sendet. Hier sind der zweite Zeitabstand ΔT2 und der fünfte Zeitabstand ΔT5 zudem identisch. Das dritte Laufzeitantwortsignal 214c wird vorzugsweise von der zweiten Steuereinheit des zweiten Personensicherheitsmoduls 1b mittels der zweiten Empfangseinheit detektiert, woraufhin das zweite Personensicherheitsmodul 1b unter Verwendung des dritten Laufzeitantwortsignals 214c mittels der zweiten Steuereinheit dann einen dritten räumlichen Abstand A3 zwischen dem zweiten Personensicherheitsmodul 1b und dem dritten Personensicherheitsmodul 1c ermittelt. Analog zum ersten Personensicherheitsmodul 1a sendet vorzugsweise auch das zweite Personensicherheitsmodul 1b in Antwort auf das Ermitteln des dritten räumlichen Abstands A3 ein drittes Abstandssignal 216c, das den dritten Abstand A3 repräsentiert, an das dritte Personensicherheitsmodul 1c. Das dritte Personensicherheitsmodul 1c ermittelt vorzugsweise daraufhin unter Verwendung des dritten Abstandssignals 216c den dritten Abstand A3.

Wenn ein dritter Detektionszeitraum TD3 seit dem Einleiten des Überwachens des zweiten Empfangsbereichs mittels der zweiten Empfangseinheit abgelaufen ist, beendet vorzugsweise die zweite Steuereinheit das Überwachen. Der dritte Detektionszeitraum TD3 ist hier identisch zum ersten Detektionszeitraum TD1, wobei der dritte Detektionszeitraum TD3 und der fünfte Zeitabstand ΔT5 vorzugsweise derart gewählt sind, dass das dritte Laufzeitantwortsignal 214c zuverlässig erfasst wird. Auch hier wird also eine Energieeinsparung gegenüber einem dauerhaften Überwachen erreicht.

Das dritte Personensicherheitsmodul 1c beendet vorzugsweise das Überwachen des dritten Empfangsbereichs der dritten Empfangseinheit des dritten Personensicherheitsmoduls 1c, wenn ein vierter Detektionszeitraum TD4 seit dem Einleiten des Überwachens des dritten Empfangsbereichs abgelaufen ist. Der vierte Detektionszeitraum TD4 und der vierte Zeitabstand ΔT4 sind dabei vorzugsweise derart gewählt, dass das von dem zweiten Personensicherheitsmodul 1b gesendete zweite Laufzeitsignal 212b und das zweite Abstandssignal 216b zuverlässig von dem dritten Personensicherheitsmodul 1c detektiert werden können. Hier ist ein Wert des vierten Detektionszeitraums TD4 vorzugsweise größer als ein Wert des dritten Detektionszeitraums TD3, wobei auch hier andere Werte der Detektionszeiträume TD3, TD4 bevorzugt sein können.

Das Verfahren zum Ermitteln des ersten Abstands A1, des zweiten Abstands A2 und des dritten Abstands A3 wird dann vorzugsweise in regelmäßigen zeitlichen Abständen, die vorzugsweise der Blinkzeitwiederholrate TBZ entsprechen, wiederholt. Ferner kann ein Ermitteln der Abstände A1, A2, A3 auch bereits in den Detektionsphasen 202a, 202b, 202c erfolgen.

An die Messphasen 208a, 208b, 208c schließen dann vorzugsweise erneute Detektionsphasen 202a, 202b, 202c an. In den erneuten Detektionsphasen können weitere Personensicherheitsmodule erkannt werden. Ferner ermitteln die Personensicherheitsmodule 1a, 1b, 1c vorzugsweise, ob andere Personensicherheitsmodul 1a, 1b, 1c, deren Bezeichner in dem Personensicherheitsmodul 1a, 1b, 1c gespeichert ist, in der Detektionsphase 202a, 202b, 202c eine Blinksignal 204a, 204b, 204c beziehungsweise ein Blinkantwortsignal 206a, 206b, 206c senden. Falls dies der Fall ist, wird vorzugsweise keine Änderung vorgenommen. Falls beispielsweise das zweite Personensicherheitsmodul 1b kein zweites Blinkantwortsignal 206b an das erste Personensicherheitsmodul 1a sendet, wird dies vorzugsweise von dem ersten Personensicherheitsmodul 1a registriert. Wenn ein solches Ausbleiben eines Signals für eine vorbestimmte Anzahl von ersten Detektionsphasen 202a registriert wird, löscht die erste Steuereinheit 5a vorzugsweise den zweiten Bezeichner, der das zweite Personensicherheitsmodul 1b kennzeichnet, aus dem ersten Speicher 13a. Es soll verstanden werden, dass das Löschen des Bezeichners auch bereits bei einem erstmaligen Ausbleiben eines Blinksignals 204a, 204b, 204c und/oder Blinkantwortsignals 206a, 206b, 206c oder nach anderen Kriterien, wie etwa einer festen Zeitdauer, der Anzahl der gespeicherten Bezeichner, der Art des Bezeichner, oder aufgrund einer Löschanforderung, die von einer Einheit bereitgestellt wird, erfolgen kann.

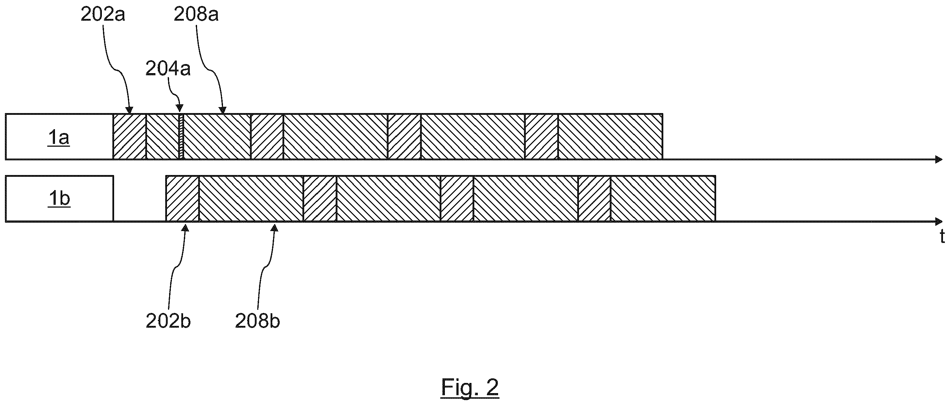

Figur 2 verdeutlicht ein alternatives Ausführungsbeispiel oder eine bevorzugte Weiterbildung des Warnverfahrens 200, wobei nur das erste Personensicherheitsmodul 1a und das zweite Personensicherheitsmodule 1b dargestellt sind. In diesem Ausführungsbeispiel werden die erste Detektionsphase 202a und die zweite Detektionsphase 202b nicht zeitgleich begonnen. Während der ersten Detektionsphase 202a des ersten Personensicherheitsmoduls 1a wird der zweite Empfangsbereich des zweiten Personensicherheitsmoduls 1b dabei nicht überwacht. Da aber das erste Blinksignal 204a vorzugsweise auch während der ersten Messphase 208a gesendet wird, kann das zweite Personensicherheitsmodul 1b das erste Blinksignal 204a des ersten Personensicherheitsmoduls 1a während seiner zweiten Detektionsphase 2b empfangen. Der weitere Verfahrensablauf zum Bestimmen des ersten Abstands 1a ist dabei identisch. Figur 2 soll dabei verdeutlichen, dass ein Ermitteln des Abstands auch dann möglich ist, wenn die Detektionsphasen 202a, 202b, 202c und Messphasen 208a, 208b, 208c der verschiedenen Personensicherheitsmodule 1a, 1b, 1c zeitlich versetzt zueinander durchgeführt werden. Dies kann beispielsweise dann der Fall sein, wenn Uhren der einzelnen Personensicherheitsmodule 1a, 1 b, 1c nicht synchronisiert sind, sondern eine Abweichung im µs-Bereich aufweisen.

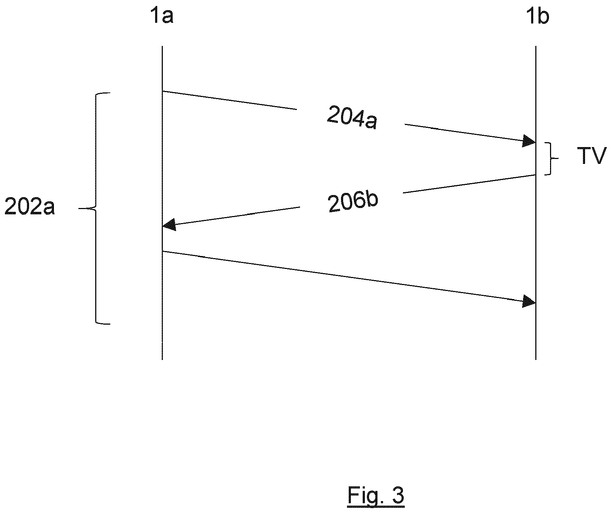

Figur 3 illustriert die erste Detektionsphase 202a des ersten Personensicherheitsmoduls 1a. Zunächst wird vorzugsweise das erste Blinksignals 204a von dem ersten Personensicherheitsmodul 1a an das zweite Personensicherheitsmodul 1b gesendet und dort Detektiert. Wie Figur 3 zeigt, ist das von der zweiten Steuereinheit des zweiten Personensicherheitsmoduls 1b initiierte Senden des zweiten Blinkantwortsignals 206b zeitlich zum Detektieren des ersten Blinksignals 204a durch die zweite Steuereinheit des zweiten Personensicherheitsmoduls 1b verzögert. Diese zeitliche Verzögerung entspricht beispielsweise einer Verarbeitungszeit TV die von dem zweiten Personensicherheitsmodul 1b zum Detektieren des ersten Blinksignals 204a bis zum in Antwort darauf erfolgenden Senden des zweiten Blinkantwortsignals 206b benötigt wird. Diese Verarbeitungszeit TV ist bekannt und kann zusammen mit dem zweiten Blinkantwortsignal 204b an das erste Personensicherheitsmodul 1a übermittelt werden. Die erste Steuereinheit 5a kann daher vorzugsweise dazu ausgebildet sein, den ersten Abstand A1 unter Verwendung des zweiten Blinkantwortsignals 206b zu ermitteln. Ferner ist es bevorzugt, den Empfänger des ersten Personensicherheitsmoduls 1a nur dann einzuschalten, wenn das zweite Blinkantwortsignal erwartet wird. D.h. in dem Ausführungsbeispiel der Figur 2 reicht es jedenfalls aus, den Empfänger erst nach Ablauf der Verarbeitungszeit TV gemessen ab dem Senden des ersten Blinksignals einzuschalten, da vorher kein zweites Blinkantwortsignal erwartet wird. Auch dies spart Energie und damit Batteriekapazität.

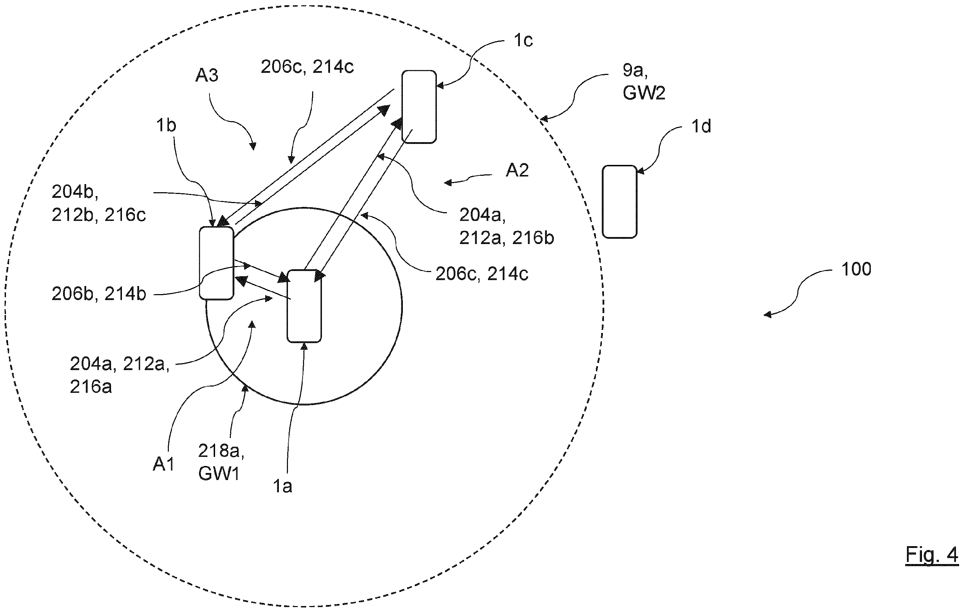

Figur 4 illustriert Personensicherheitsmodule 1a, 1b, 1c, 1d die mit räumlichen Abständen A1, A2, A3 zueinander angeordnet sind. Neben dem ersten, zweiten und dritten Personensicherheitsmodul 1a, 1b, 1c zeigt Figur 4 auch noch ein viertes Personensicherheitsmodul 1d. Das vierte Personensicherheitsmodul 1d liegt außerhalb des Empfangsbereichs 9a des ersten Personensicherheitsmoduls 1a, sodass hier kein Senden von Signalen von dem ersten Personensicherheitsmodul 1a zum vierten Personensicherheitsmodul 1d und umgekehrt erfolgt. Das vierte Personensicherheitsmodul 1d kann allerdings in dem nicht dargestellten dritten Empfangsbereich des dritten Personensicherheitsmoduls 1c angeordnet sein, sodass diese Personensicherheitsmodule miteinander Signale austauschen. Ein solcher Austausch ist jedoch aus Gründen der Übersicht nicht dargestellt.

Das zweite Personensicherheitsmodul 1b und das dritte Personensicherheitsmodul 1c befinden sich innerhalb des ersten Empfangsbereichs 9a des ersten Personensicherheitsmoduls 1a. Daher sendet das erste Personensicherheitsmodule 1a zum Ermitteln des ersten Abstands A1 und des zweiten Abstands A2 erste Blinksignale 204a, erste Laufzeitsignale 212a, ein erstes Abstandssignal 216a und ein zweites Abstandssignal 216b an das zweite Personensicherheitsmodul 1b beziehungsweise das dritte Personensicherheitsmodul 1c. In Antwort darauf sendet das zweite Personensicherheitsmodul 1b das zweite Blinkantwortsignal 206b sowie das zweite Laufzeitantwortsignal 214b, und das dritte Personensicherheitsmodul 1c das dritte Blinkantwortsignal 206c und das dritte Laufzeitantwortsignal 214c. Das Ermitteln der Abstände A1, A2 erfolgt dabei wie obenstehend erläutert. Zum Ermitteln des dritten Abstands A3 zwischen dem zweiten Personensicherheitsmodule 1b und dem dritten Personensicherheitsmodul 1c tauschen diese Personensicherheitsmodule 1b, 1c das zweite Blinksignal 204b, das dritte Blinkantwortsignal 206c, das zweite Laufzeitsignal 212b, das dritte Laufzeitantwortsignal 212c und das dritte Abstandssignal 216c aus.

Die erste Steuereinheit 5a des ersten Personensicherheitsmoduls 1a ist dazu ausgebildet, eine erste Warnzone 218a zu definieren. Die erste Warnzone 218a repräsentiert dabei einen Mindestabstand, der zu anderen Personensicherheitsmodulen 1b, 1c, 1d eingehalten werden soll. Zum Definieren der ersten Warnzone 218a verwendet die erste Steuereinheit 5a einen ersten Abstandsgrenzwert GW1. Die erste Steuereinheit 5a vergleicht diesen ersten Abstandsgrenzwert GW1 mit den ermittelten Abständen A1, A2 zum zweiten Personensicherheitsmodul 1b beziehungsweise zum dritten Personensicherheitsmodul 1c.

Wenn einer der Abstände A1, A2 den ersten Abstandsgrenzwert GW1 unterschreitet, führt das erste Personensicherheitsmodul 1a eine erste Folgeoperation 220a durch, die hier eine erste Warnoperation 222a ist. Das erste Personensicherheitsmodul 1a gibt im Rahmen der ersten Warnoperation 222a einen ersten Warnreiz 224a aus, der für einen nicht dargestellten Benutzer wahrnehmbar ist. Der erste Warnreiz 224a kann beispielsweise einen Warnton, eine Vibration oder ein Warnlicht sein. Ferner definiert die erste Steuereinheit 5a in diesem Ausführungsbeispiel noch eine zweite Warnzone 218b, die deckungsgleich mit dem ersten Empfangsbereich 9a ist. In analoger Weise erfolgt das Definieren der zweiten Warnzone 218b unter Verwendung eines zweiten Abstandsgrenzwerts GW2. Da das dritte Personensicherheitsmodul 1c innerhalb der zweiten Warnzone 218b angeordnet ist, für das erste Personensicherheitsmodul 1a eine zweite Folgeoperation F2 durch. Es soll verstanden werden, dass auch das zweite Personensicherheitsmodul 1b, das dritte Personensicherheitsmodul 1c und das vierte Personensicherheitsmodul 1d dazu ausgebildet sind, Warnzonen 218a, 218b zu definieren und zu überwachen sowie gegebenenfalls Folgeoperationen F1, F2 durchzuführen.

Figur 5 zeigt schematisch den Aufbau des ersten Personensicherheitsmoduls 1a. Die erste Steuereinheit 5a weist hier eine erste Recheneinheit 3a auf und ist mit dem ersten Speicher 13a verbunden. Ferner ist die erste Steuereinheit mit einer Energieversorgungseinrichtung 15 verbunden, die das erste Personensicherheitsmodul 1a mit elektrischer Energie versorgt. Hier ist die Energieversorgungseinrichtung 15 als wiederaufladbarer Akkumulator 17 ausgeführt. Die Energieversorgungseinrichtung 15 kann aber auch als einweg Energiequelle, beispielsweise als einfache Batterie, ausgebildet sein. Die erste Empfangseinheit 7a und die erste Sendeeinheit 11a sind hier als kombinierte Sende-Empfangs-Einheit 19 ausgebildet, die eine Antenne 21 aufweist. Durch die kombinierte Sende-Empfangs-Einheit 19 kann ein besonders einfacher Aufbau des Personensicherheitsmoduls 1a erreicht werden.

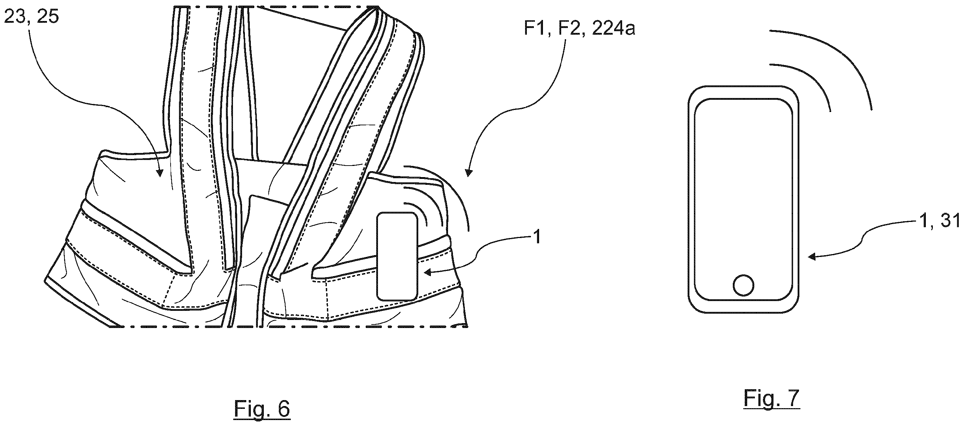

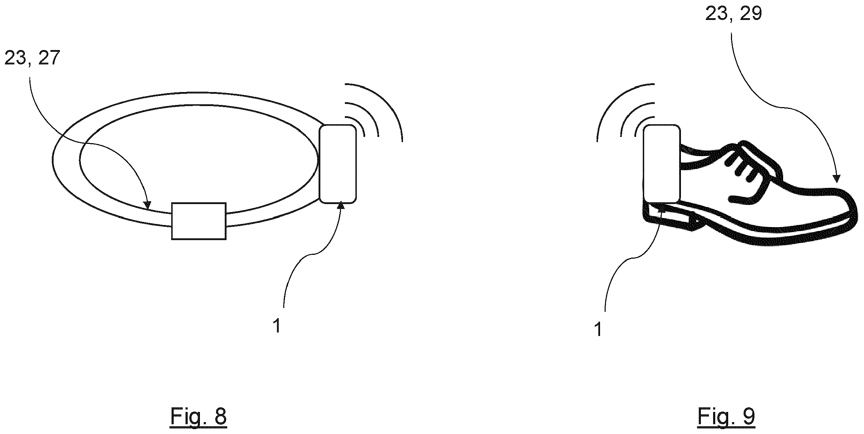

Gemäß Figur 6 ist das Personensicherheitsmodule 1a, 1b, 1c, 1d in eine Kleidungsstück 23 integriert, wobei das Kleidungsstück 23 eine Warnweste 25 ist. Sind die Komponenten des Personensicherheitsmoduls 1a, 1b, 1c, 1d in einem gemeinsamen Gehäuse 26 angeordnet. Es kann jedoch auch vorgesehen sein, dass beispielsweise die Sendeeinheit 13a und/oder die Empfangseinheit 7a an einer exponierten Stelle der Warnweste 25 angeordnet sind. Eine solche exponierte Stelle ist beispielsweise an einem Kragen der Warnweste 25. Ferner kann das Personensicherheitsmodul 1 auch mehrere Warneinrichtungen zum Erzeugen von Warnreizen aufweisen (nicht dargestellt), die an der Warnweste 25 verteilt angeordnet sind. Beispielsweise können mehrere Warnleuchten entlang von Trägern der Warnweste 25 angeordnet sein. Auch gemäß den Figuren 8 und 9 ist das Personensicherheitsmodul 1a, 1b, 1c, 1d in ein Kleidungsstück 23 integriert. In Figur 8 ist das Kleidungsstück 23 ein Gürtel 27, wohingegen das Kleidungsstück 23 in Figur 9 ein Schuh 29 ist. Vorzugsweise ist das Personensicherheitsmodul 1 um etwa ein Viertel einer Gesamtlänge des Gürtels 27 von einer Schließe des Gürtels 27 versetzt angeordnet, wodurch erreicht werden kann, dass das Personensicherheitsmodul 1 in einer komfortablen Trageposition angeordnet ist, wenn der Gürtel 27 von einem Benutzer getragen wird. Wenn das Kleidungsstück 23 ein Schuh 29 ist, dann ist das Personensicherheitsmodul 1 vorzugsweise in einer Sohle des Schuhs 29 integriert. Besonders bevorzugt ist die Sende-Empfangs-Einheit 19 dann in einem Fersenbereich des Schuhs 29 angeordnet.

Besonders bevorzugt kann das Personensicherheitsmodul 1a, 1b, 1c, 1d ein Mobiltelefon 31 sein (Figur 7). Durch das Ausbilden des Personensicherheitsmoduls 1a, 1b, 1c, 1d als Mobiltelefon 31 kann in besonders vorteilhafter Weise eine weitreichende Verbreitung von Personensicherheitsmodulen 1a, 1b, 1c, 1d erreicht werden. Nahezu alle Personen die sich im öffentlichen Raum bewegen führen heute ein Mobiltelefon 31 mit sich, sodass eine Abstandsermitteln zu nahezu allen potentiell ansteckenden Personen überwacht werden kann. Vorzugsweise ist das Computerprogrammprodukt als auf einem Mobiltelefon 31 installierbare App-Anwendung ausgebildet.

## Patentansprüche

1. Computerprogrammprodukt, aufweisend Codemittel, die dazu ausgebildet sind, wenn diese auf einer Recheneinheit eines ersten Personensicherheitsmoduls ausgeführt werden, mittels des ersten Personensicherheitsmoduls ein Warnverfahren durchzuführen, das aufweist:
a) eine Detektionsphase, mit:
- Senden eines ersten Blinksignals mittels des ersten Personensicherheitsmoduls;
- Überwachen eines Empfangsbereichs einer Empfangseinheit des ersten Personensicherheitsmoduls für einen vordefinierten Erkennungszeitraum;
und
a1) Detektieren eines zweiten Blinksignals, das von einem zweiten Personensicherheitsmodul gesendet wird, und Senden eines ersten Blink-Antwortsignals in Antwort auf das Detektieren des zweiten Blinksignals,
und/oder
a2) Detektieren eines zweiten Blink-Antwortsignals mittels der Empfangseinheit, das von einem zweiten Personensicherheitsmodul in Antwort auf das Empfangen des ersten Blinksignals an dem zweiten Personensicherheitsmodul gesendet wird;
b) eine Messphase, mit einer Abstandsbestimmungsoperation, wobei die Abstandsbestimmungsoperation aufweist:
Überwachen des Empfangsbereichs der Empfangseinheit des ersten Personensicherheitsmoduls für einen Detektionszeitraum;
für den Fall, dass während der Detektionsphase ein zweites Blink-Antwortsignal detektiert wird:
Senden eines ersten Laufzeitsignals mittels einer Antenneneinheit des ersten Personensicherheitsmoduls;
Detektieren eines zweiten Laufzeitantwortsignals, das von dem zweiten Personensicherheitsmodul in Antwort auf ein Detektieren des ersten Laufzeitsicherheitssignals gesendet wird; und
Ermitteln eines Abstands zwischen dem ersten Personensicherheitsmodul und dem zweiten Personensicherheitsmodul unter Verwendung des zweiten Laufzeitantwortsignals.

2. Computerprogrammprodukt nach Anspruch 1, wobei das Überwachen des Empfangsbereichs der Empfangseinheit nur während des Erkennungszeitraums und während des Detektionszeitraums erfolgt, und wobei der Detektionszeitraum vorzugsweise geringer ist als der Erkennungszeitraum.

3. Computerprogrammprodukt, aufweisend Codemittel, die dazu ausgebildet sind, wenn diese auf einer Recheneinheit eines ersten Personensicherheitsmoduls ausgeführt werden, mittels des ersten Personensicherheitsmoduls ein Warnverfahren durchzuführen, das aufweist:
a) eine Detektionsphase, mit:
- Senden eines ersten Blinksignals mittels des ersten Personensicherheitsmoduls;
- Überwachen eines Empfangsbereichs einer Empfangseinheit des ersten Personensicherheitsmoduls für einen vordefinierten Erkennungszeitraum auf den Empfang eines zweiten Blink-Antwortsignals und/oder zweiten Blinksignals;
b) eine Messphase, mit einer Abstandsbestimmungsoperation, wobei die Abstandsbestimmungsoperation aufweist:
Überwachen des Empfangsbereichs der Empfangseinheit des ersten Personensicherheitsmoduls für einen Detektionszeitraum;
Ermitteln eines Abstands zwischen dem ersten Personensicherheitsmodul und dem zweiten Personensicherheitsmodul,
wobei das Überwachen des Empfangsbereichs der Empfangseinheit nur während des Erkennungszeitraums und während des Detektionszeitraums erfolgt, und
wobei der Detektionszeitraum vorzugsweise geringer ist als der Erkennungszeitraum.

4. Computerprogrammprodukt einem der vorstehenden Ansprüche, wobei im Anschluss an das Ermitteln eines Abstands zwischen dem ersten Personensicherheitsmodul und dem zweiten Personensicherheitsmodul ein erstes Abstandssignal gesendet wird, das den Abstand repräsentiert.

5. Computerprogrammprodukt nach einem der vorstehenden Ansprüche, wobei fürden Fall, dass während der Detektionsphase ein zweites Blinksignal detektiert wird, ferner ausgeführt wird:
Detektieren eines zweiten Abstandssignals, das von dem zweiten Personensicherheitsmodul gesendet wird,
wobei das Ermitteln des Abstands zwischen dem ersten Personensicherheitsmodul und dem zweiten Personensicherheitsmodul, unter Verwendung des zweiten Abstandssignals erfolgt.

6. Computerprogrammprodukt nach einem der vorstehenden Ansprüche, wobei das Senden eines ersten Blinksignals mittels des ersten Personensicherheitsmoduls auch während der Messphase durchgeführt wird und wobei das Senden eines ersten Blinksignals vorzugsweise zyklisch mit einer Blinkzeitwiederholrate wiederholt wird.

7. Computerprogrammprodukt nach einem der vorstehenden Ansprüche,
wobei das Überwachen des Empfangsbereichs der Empfangseinheit für den Fall, dass in der Detektionsphase ein zweites Blinksignal detektiert wird, mit einem ersten Zeitabstand zum Detektieren des zweiten Blinksignals eingeleitet wird, und
wobei für den Fall, dass in der Detektionsphase ein zweites Blink-Antwortsignal detektiert wird, das Überwachen des Empfangsbereichs der Empfangseinheit mit einem zweiten Zeitabstand zum Detektieren des zweiten Blink-Antwortsignals eingeleitet wird.

8. Computerprogrammprodukt nach einem der vorstehenden Ansprüche, wobei das Warnverfahren ferner eine Warnphase aufweist, mit den Schritten:
Vergleichen des ermittelten Abstands zwischen dem ersten Personensicherheitsmodul und dem zweiten Personensicherheitsmodul mit einem ersten Abstandsgrenzwert, und
Durchführen einer ersten Folgeoperation, wenn Ermittelt wird, dass der Abstand zwischen dem ersten Personensicherheitsmodul und dem zweiten Personensicherheitsmodul den ersten Abstandsgrenzwert unterschreitet,
wobei die erste Folgeoperation vorzugsweise ein Bereitstellen eines ersten Warnsignals umfasst.

9. Computerprogrammprodukt nach Anspruch 8, wobei die Warnphase ferner aufweist:
Vergleichen des ermittelten Abstands zwischen dem ersten Personensicherheitsmodul und dem zweiten Personensicherheitsmodul mit einem zweiten Abstandsgrenzwert, der größer ist als der erste Abstandsgrenzwert,
Durchführen einer zweiten Folgeoperation, wenn Ermittelt wird, dass der Abstand zwischen dem ersten Personensicherheitsmodul und dem zweiten Personensicherheitsmodul den zweiten Abstandsgrenzwert unterschreitet, und vorzugsweise Bereitstellen eines zweiten Warnsignals umfasst.

10. Personensicherheitsmodul zum Abstandsermitteln, aufweisend:
eine Empfangseinheit, eine Sendeeinheit, eine Energieversorgungseinheit zum Versorgen des Personensicherheitsmoduls mit elektrischer Energie,
eine Steuereinheit mit einer Recheneinheit und einem Speicher, in welchem das Computerprogrammprodukt gemäß einem der vorstehenden Ansprüche 1 bis 9 gespeichert ist, wobei die Recheneinheit zum Ausführen der Codemittel des Computerprogrammprodukts ausgebildet ist, und vorzugsweise
eine Energiegewinnungseinheit, die zum kabellosen Gewinnen von elektrischer Energie ausgebildet ist.

11. Personensicherheitsmodul nach Anspruch 10, wobei das Personensicherheitsmodul eine Mobileinheit, insbesondere ein Mobiltelefon ist.

12. Kleidungsstück, insbesondere Arbeits-Kleidungsstück, aufweisend ein Personensicherheitsmodul gemäß Anspruch 10, wobei das Kleidungsstück vorzugsweise eine Warnweste, ein Gürtel oder ein Schuh ist.

13. Sicherheitssystem zum Durchführen eines Warnverfahrens, aufweisend
ein erstes Personensicherheitsmodul, mit einer ersten Steuereinheit, einer ersten Empfangseinheit und einer ersten Sendeeinheit,
ein zweites Personensicherheitsmodul, mit einer zweiten Steuereinheit, einer zweiten Empfangseinheit und einer zweiten Sendeeinheit,
wobei die erste Steuereinheit dazu ausgebildet ist, in einer ersten Detektionsphase die erste Sendeeinheit zum Senden eines ersten Blinksignals anzusteuern und einen ersten Empfangsbereich mittels der ersten Empfangseinheit für einen ersten Erkennungszeitraum zu überwachen,
wobei die zweite Steuereinheit dazu ausgebildet ist, in einer zweiten Detektionsphase die zweite Sendeeinheit zum Senden eines zweiten Blinksignals anzusteuern und einen zweiten Empfangsbereich mittels der zweiten Empfangseinheit für einen zweiten Erkennungszeitraum zu überwachen,
wobei die erste Steuereinheit dazu ausgebildet ist,
einen ersten Tag-Status für das erste Personensicherheitsmodul zu setzen sowie die erste Sendeeinheit zum Senden eines ersten Blinkantwortsignals anzusteuern, wenn in der ersten Detektionsphase vor dem Senden des ersten Blinksignals das zweite Blinksignal im ersten Empfangsbereich detektiert wird,
und einen ersten Anchor-Status für das erste Personensicherheitsmodul zu setzen, wenn in der ersten Detektionsphase ein zweites Blinkantwortsignal des zweiten Personensicherheitsmoduls empfangen wird,
wobei die zweite Steuereinheit dazu ausgebildet ist,
einen zweiten Tag-Status für das zweite Personensicherheitsmodul zu setzen sowie die zweite Sendeeinheit zum Senden eines zweiten Blinkantwortsignals anzusteuern, wenn in der zweiten Detektionsphase vordem Senden des zweiten Blinksignals das erste Blinksignal im zweiten Empfangsbereich detektiert wird,
und einen zweiten Anchor-Status für das zweite Personensicherheitsmodul zu setzen, wenn in der zweiten Detektionsphase ein erstes Blinkantwortsignal des ersten Personensicherheitsmoduls empfangen wird,
wobei die erste Steuereinheit und die zweite Steuereinheit dazu ausgebildet sind, in einer sich an die erste Detektionsphase anschließenden ersten Messphase gemeinsam mittels Laufzeitmessung einen Abstand zwischen dem ersten und zweiten Personensicherheitsmodul zu ermitteln.

14. Sicherheitssystem nach Anspruch 13,
wobei die erste Steuereinheit dazu ausgebildet ist, in einer an die erste Detektionsphase anschließenden ersten Messphase
ein erstes Laufzeitsignal zu senden,
den ersten Empfangsbereich mittels der ersten Empfangseinheit für einen ersten Detektionszeitraum zu überwachen,
ein von dem zweiten Personensicherheitsmodul gesendetes zweites Laufzeitantwortsignal zu empfangen, und
einen Abstand zwischen dem ersten Personensicherheitsmodul und dem zweiten Personensicherheitsmodul unter Verwendung des zweiten Laufzeitantwortsignals zu ermitteln, wenn der erste Anchor-Status gesetzt ist,
den ersten Empfangsbereich mittels der ersten Empfangseinheit für den ersten Detektionszeitraum zu überwachen,
ein von dem zweiten Personensicherheitsmodul gesendetes zweites Laufzeitsignal zu empfangen, und
in Antwort auf das Empfangen des zweiten Laufzeitsignals die erste Sendeeinheit zum Senden eines ersten Laufzeitantwortsignals anzusteuern, wenn der erste Tag-Status gesetzt ist,
wobei die zweite Steuereinheit dazu ausgebildet ist, in einer an die zweite Detektionsphase anschließenden zweiten Messphase
das zweite Laufzeitsignal zu senden,
den zweiten Empfangsbereich mittels der zweiten Empfangseinheit für einen zweiten Detektionszeitraum zu überwachen,
das vom dem ersten Personensicherheitsmodul gesendete erste Laufzeitantwortsignal zu empfangen, und
einen Abstand zwischen dem ersten Personensicherheitsmodul und dem zweiten Personensicherheitsmodul unter Verwendung des ersten Laufzeitantwortsignals zu ermitteln, wenn der zweite Anchor-Status gesetzt ist,
den zweiten Empfangsbereich mittels der zweiten Empfangseinheit für den zweiten Detektionszeitraum zu überwachen,
das von dem ersten Personensicherheitsmodul gesendete erste Laufzeitsignal zu empfangen, und
in Antwort auf das Empfangen des ersten Laufzeitsignals die zweite Sendeeinheit zum Senden des zweiten Laufzeitantwortsignals anzusteuern, wenn der zweite Tag-Status gesetzt ist, wobei die erste Steuereinheit vorzugsweise dazu ausgebildet ist, das Überwachen des ersten Empfangsbereichs nur für den ersten Detektionszeitraum und für den ersten Erkennungszeitraum durchzuführen, und/oder
wobei die zweite Steuereinheit vorzugsweise dazu ausgebildet ist, das Überwachen des zweiten Empfangsbereichs nur für den zweiten Detektionszeitraum und für den zweiten Erkennungszeitraum durchzuführen.

15. Sicherheitssystem mit zwei oder mehr Personensicherheitsmodulen, vorzugsweise in Form einer Warnweste, eines Gürtels, eines Schuhs, eines Helms, eines Holsters, eines Rücksacks, eines Handschuhs, eines Armbands, einer Fußmanschette, eines mobilen Endgeräts, eines Mobiltelefons, eines Tablets, einer Smart-Watch, Smart-Glasses, eines Headsets oder anderen Kopfhörers, oder dergleichen, wobei die zwei oder mehr Personensicherheitsmodule jeweils über Funk, vorzugsweise Ultrabreitband-Funk miteinander kommunizieren, gegenseitig den Abstand ermitteln und bei Unterschreiten eines Mindestabstands von beispielsweise 1,5 oder 2 Meter, ein Warnsignal ausgeben.
